# EUROPEAN PATENT SPECIFICATION

(11) **EP 2 996 016 B1**
(45) Date of publication and mention of the grant of the patent: **12.02.2020**
(21) Application number: 13884361.0
(22) Date of filing: 09.05.2013
(51) Int. Cl.: G06F 3/042, G06F 3/0488, G06F 1/16, G06F 3/01, G06F 3/03

(54) **INFORMATION PROCESSING DEVICE AND APPLICATION EXECUTION METHOD**
INFORMATIONSVERARBEITUNGSVORRICHTUNG UND ANWENDUNGSAUSFÜHRUNGSVERFAHREN
DISPOSITIF DE TRAITEMENT D'INFORMATIONS ET PROCÉDÉ D'EXÉCUTION D'APPLICATIONS

(43) Date of publication of application: 16.03.2016
(73) Proprietor: Sony Interactive Entertainment Inc., Tokyo 108-8270 (JP)
(72) Inventor: TAKASHIMA, Shinji, Tokyo 108-0075 (JP)
(74) Representative: D Young & Co LLP
(86) International application number: PCT/JP2013/002990
(87) International publication number: WO 2014/181380

(56) References cited:
- WO-A1-2013/028908
- JP-A- 2007 271 698
- JP-A- 2010 193 265
- JP-A- 2012 173 476
- US-A1- 2012 092 300
- US-A1- 2013 083 064
- US-B1- 8 184 067

## Description

### [Technical Field]

The present invention relates to an information processing technology for processing a picked up image.

### [Background Art]

Various technologies for selecting a content in response to a situation at present of a user and automatically reproducing the content have been proposed heretofore. For example, PTL 1 discloses a reproduction apparatus which determines a psychological state of a user from biological information of the user and selects music on the basis of the psychological state.

Meanwhile, attention is paid to a technology called augmented reality (AR) which presents additional information in a superposed relationship on a real space to a user, and a head mounted display unit (hereinafter referred to as "HMD") which can present a stereoscopic image having a depth has become popular. Although various types are available for the HMD, one of the HMDs is an optical transmission type HMD which uses a holographic device, a half mirror or the like to present a virtual stereoscopic image to a user and allow the user to view a manner outside the HMD in a see-through fashion through the HMD.

### [Citation List]

### [Patent Literature]

[PTL 1] Japanese Patent Laid-Open No. 2006-146630

Previously proposed arrangements are disclosed in US 2013/083064 A1 and WO 2013/028908 A1.

### [Summary]

### [Technical Problem]

Although PTL 1 adopts a fresh approach of utilizing a psychological state of a user in order to select music to be reproduced, actually there is a situation that it is not easy to determine a psychological state of a user with a high degree of accuracy. Therefore, it is desired to develop a technology for appropriately deciding a situation of a user at present and providing a service at a suitable timing to the user. The inventor of the present invention has found out the possibility that, especially by incorporating such a technology as described above into a wearable computer, for example, into a computer including an optical transmission type HMD, a situation of a user at present can appropriately decide and a suitable service may be provided. Further, the inventor of the present invention has conceived a user interface which can be handled readily by a user by utilizing a characteristic of a mounted type display unit such as a HMD.

The present invention has been made in view of such a subject as described above, and it is an object of the present invention to provide an information processing technology which can provide a service suitably to a user and a user interface application which can be handled readily by a user.

### [Solution to Problem]

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention. In order to solve the subject described above, an information processing apparatus according to an aspect of the present invention includes a recording unit configured to record an event list in which time information and physical solid image information are associated with an event, an image pickup unit configured to pick up an image of a real space, a control section configured to determine whether or not an event starting condition is satisfied, and an execution unit configured to process an application. The control section includes an image processing portion configured to determine whether an image corresponding to the physical solid image information recorded in the recording unit is included in a picked up image picked up within a time zone specified by the time information recorded in the recording unit, a condition determination portion configured to determine that the event starting condition is satisfied if it is determined that the image corresponding to the physical solid image information is included in the picked up image, and an instruction portion configured to instruct the execution unit to execute processing of the application. The execution unit starts processing of the application associated with the event whose starting condition is satisfied.

Another aspect of the present invention is an application execution method. The method includes a step of acquiring a picked up image obtained by picking up a real space, a step of referring to an event list in which time information and physical solid image information are associated with an event to determine whether an image corresponding to the physical solid image information included in the event list is included in the picked up image picked up within a time zone specified by the time information included in the event list, a step of determining, when it is determined that an image corresponding to the physical solid image information is included in the picked up image, that an event starting condition is satisfied, and a step of starting processing of an application associated with the event whose starting condition is satisfied.

A further aspect of the present invention is an information processing apparatus. This apparatus is an information processing apparatus which presents a virtual object in a superposed relationship with a real space and includes a mounted type display unit configured to display the virtual object so as to be observed by a user in the real space, an image pickup unit configured to pick up an image of the real space, an image processing section configured to specify a real physical solid image included in the picked up image, a recording unit configured to record the specified real physical solid image or a mark image corresponding to the real physical solid image as a physical solid image, and a display processing section configured to display the physical solid image on the mounted type display unit.

It is to be noted that also arbitrary combinations of the components described above and those obtained by converting representations of the present invention between methods, apparatus, systems, computer programs, data structures, recording media and so forth are effectively applied as different modes of the present invention.

### [Advantageous Effects of Invention]

With the present invention, an information processing technology which can provide a service suitably to a user and a user interface application which can be handled readily by a user can be provided.

### [Brief Description of Drawings]

[FIG. 1]

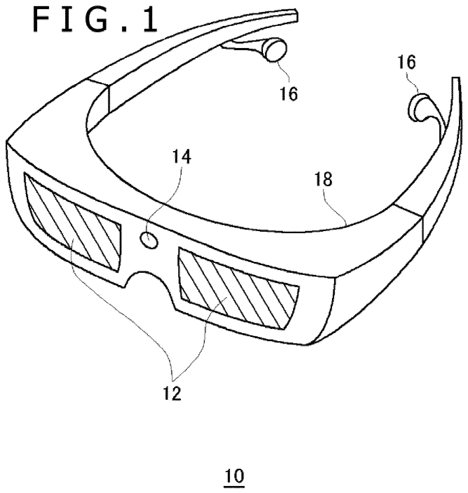

   FIG. 1 is a view schematically depicting an example of an appearance of an information processing apparatus according to an embodiment.
[FIG. 2]

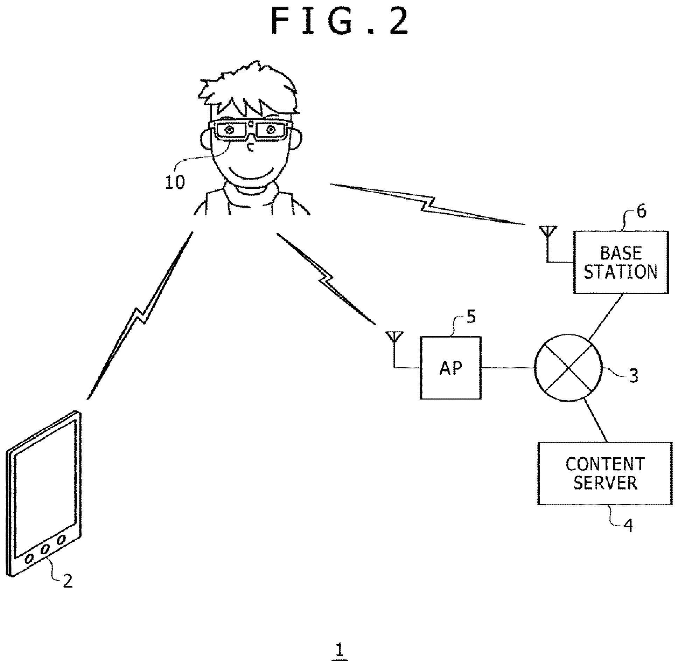

   FIG. 2 is a view schematically depicting an information processing system according to the embodiment.
[FIG. 3]

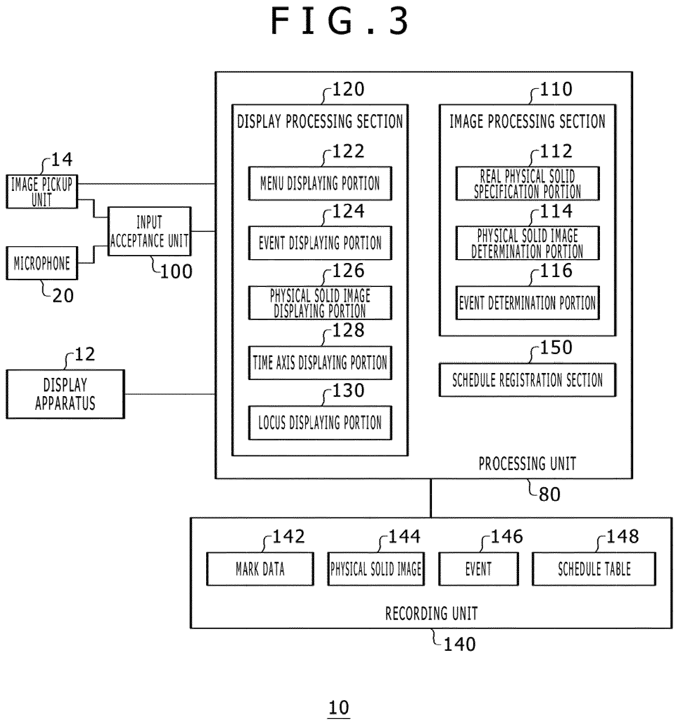

   FIG. 3 is a view depicting functional blocks for implementing a user interface providing function of the information processing apparatus.
[FIG. 4]

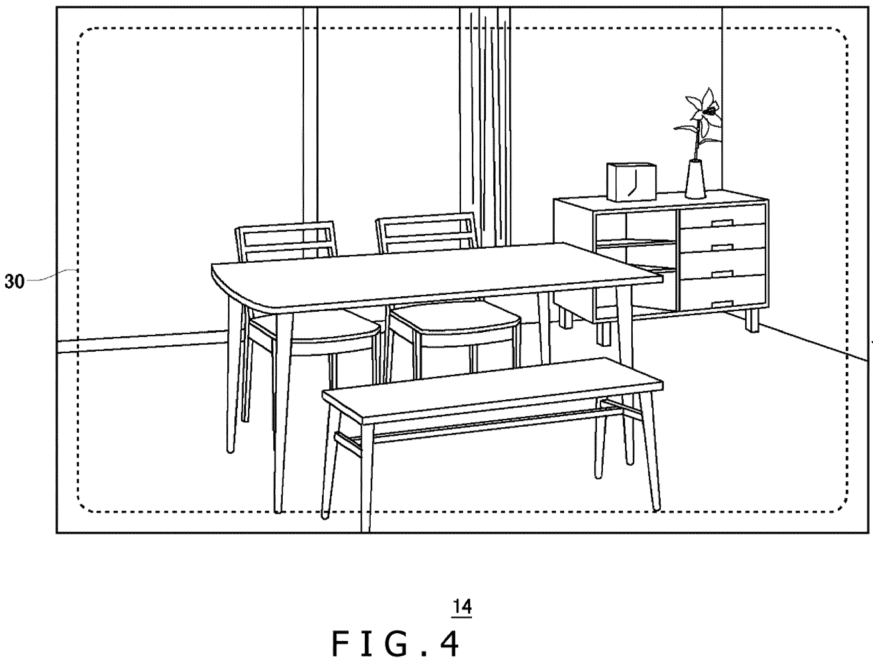

   FIG. 4 is a view depicting an example of a picked up image picked up by an image pickup unit.
[FIG. 5]

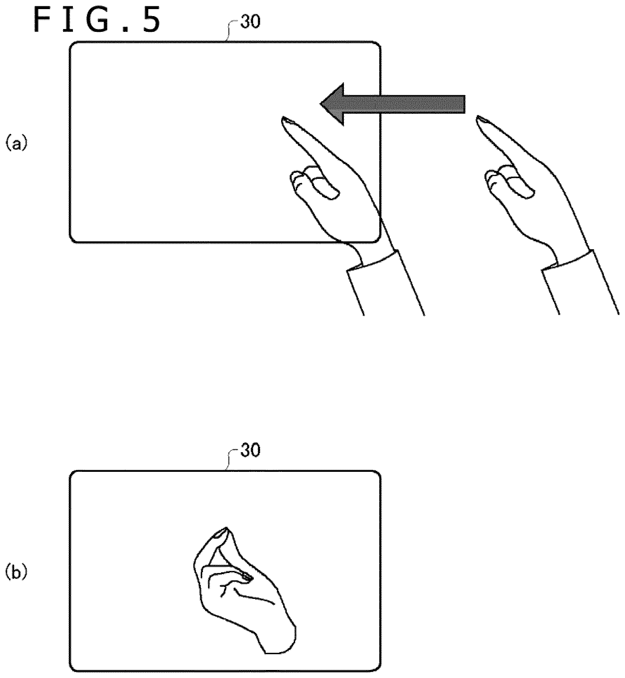

   FIG. 5(a) and FIG. 5(b) are views illustrating a detection process of a start of a gesture inputting mode.
[FIG. 6]

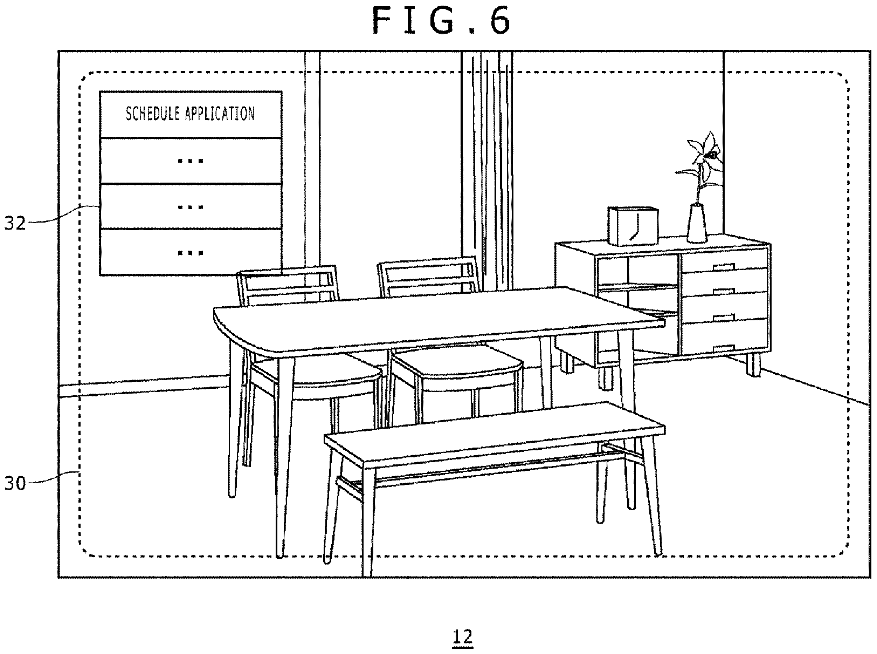

   FIG. 6 is a view illustrating a placement position of a menu screen image.
[FIG. 7]

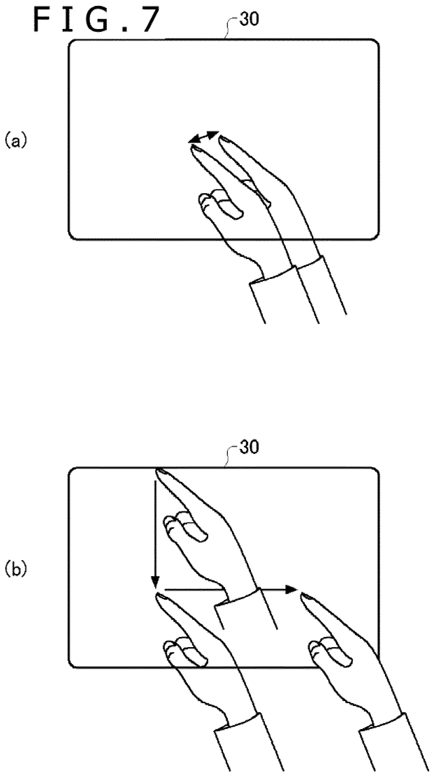

   FIG. 7(a) and FIG. 7(b) are views illustrating manners when a user does gestures.
[FIG. 8]

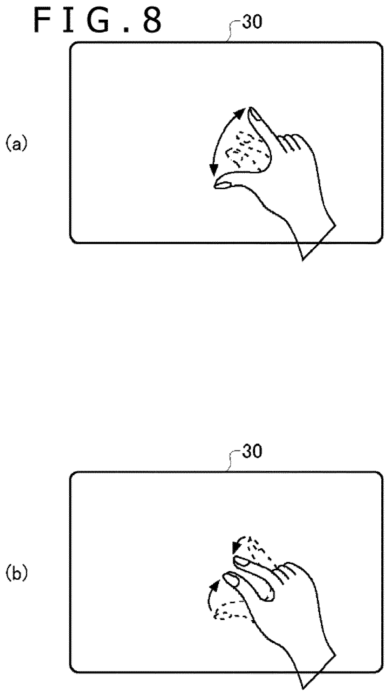

   FIG. 8(a) and FIG. 8(b) are views illustrating manners when a user does gestures.
[FIG. 9]

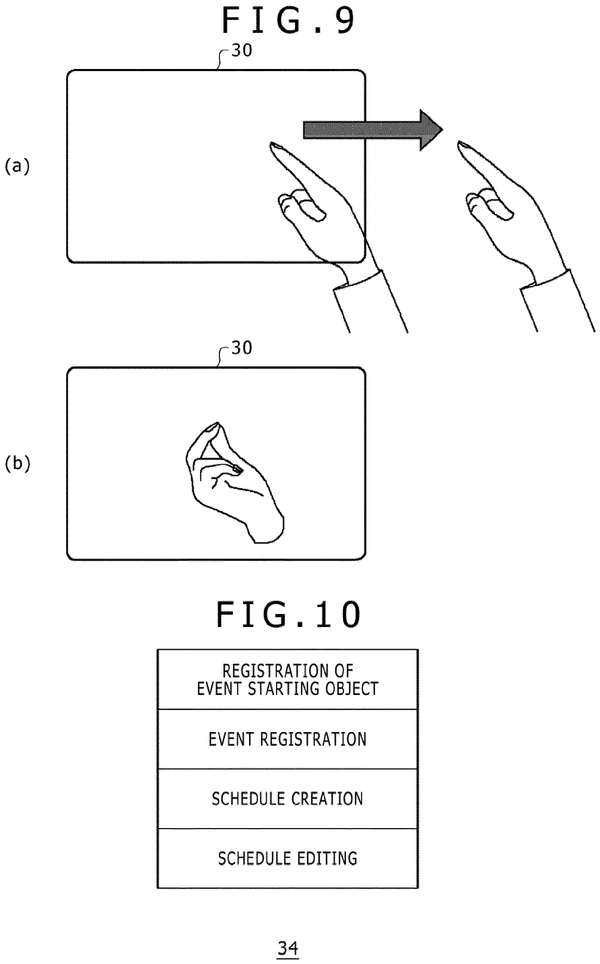

   FIG. 9(a) and FIG. 9(b) are views illustrating a detection process of an end of the gesture inputting mode.
[FIG. 10]
   FIG. 10 is a view depicting an example of a menu screen image for a lower layer.
[FIG. 11]

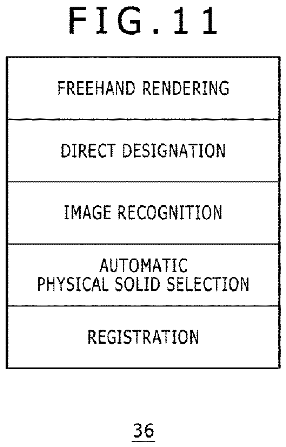

   FIG. 11 is a view depicting another example of a menu screen image of a lower layer.
[FIG. 12]

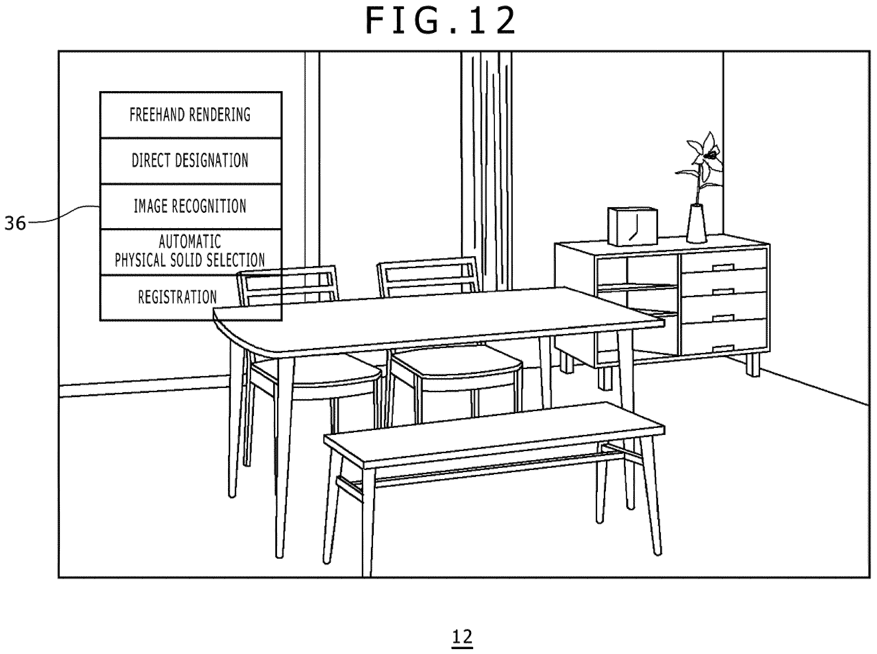

   FIG. 12 is a view depicting a scene which can be viewed through a display apparatus by a user.
[FIG. 13]

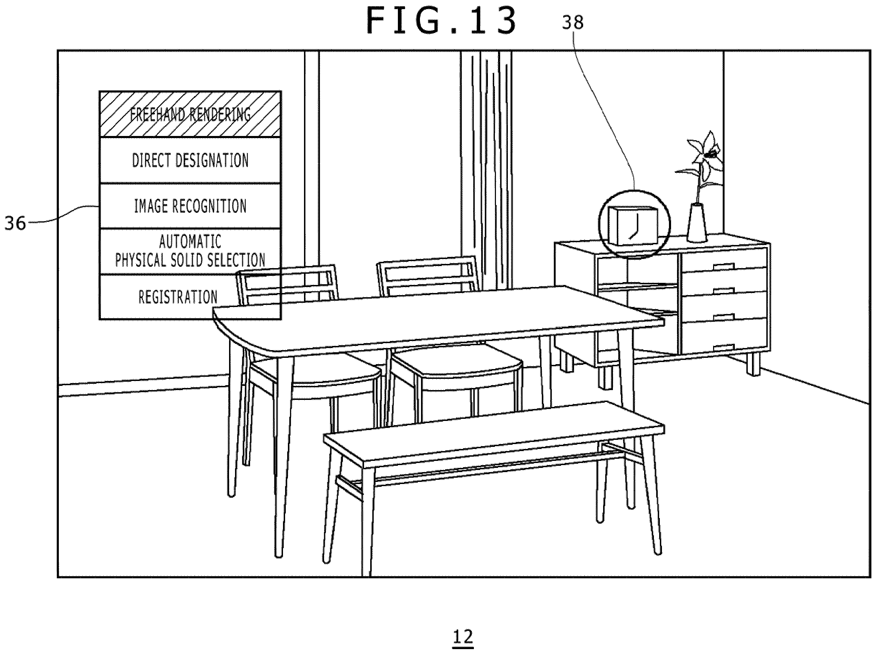

   FIG. 13 is a view depicting a locus surrounding a clock.
[FIG. 14]

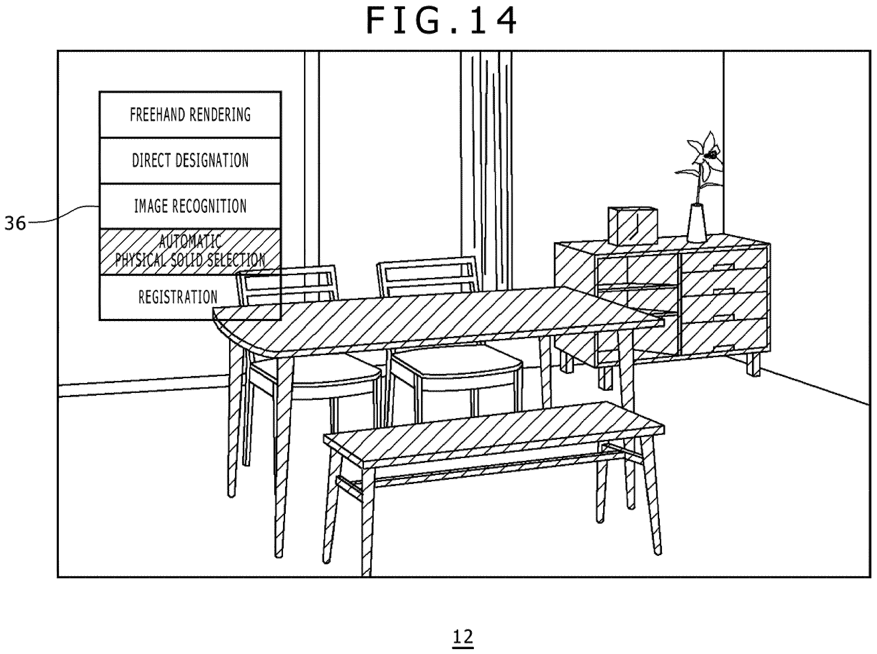

   FIG. 14 is a view depicting a real physical solid image specified by a real physical solid specification portion.
[FIG. 15]

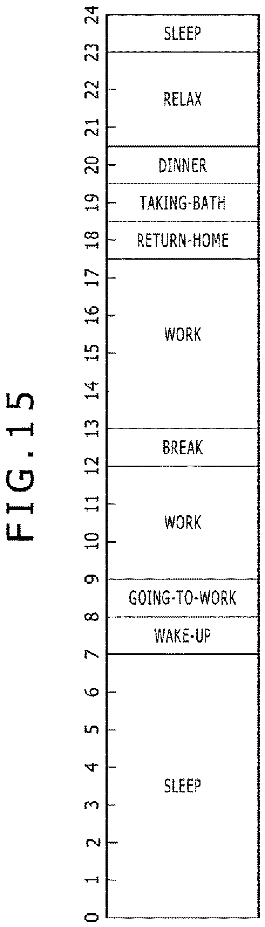

   FIG. 15 is a view depicting an average behavior table of a user.
[FIG. 16]

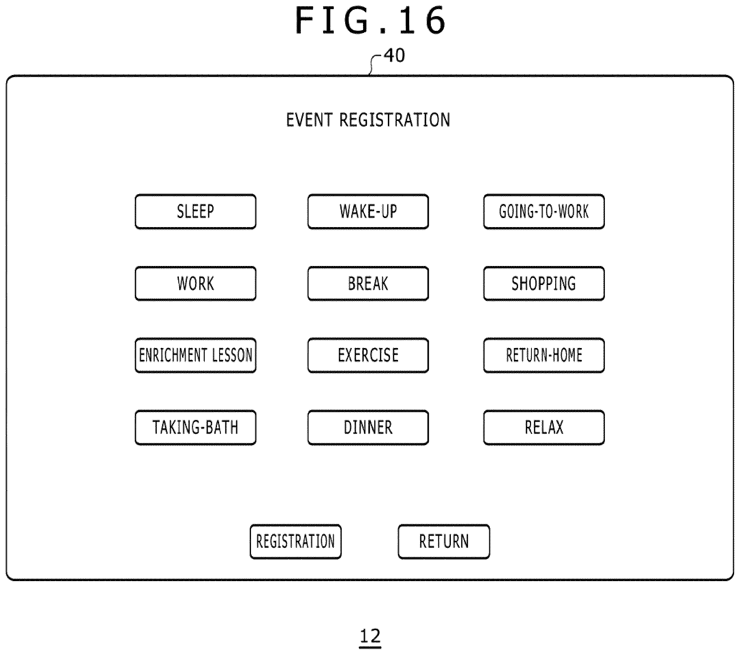

   FIG. 16 is a view depicting an event candidate presentation screen image.
[FIG. 17]

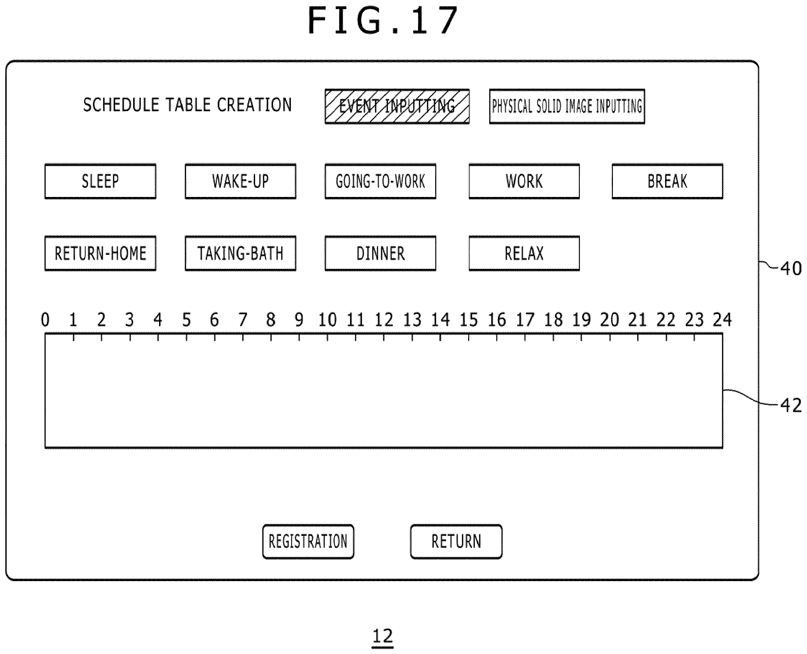

   FIG. 17 is a view depicting a schedule table creation screen image.
[FIG. 18]

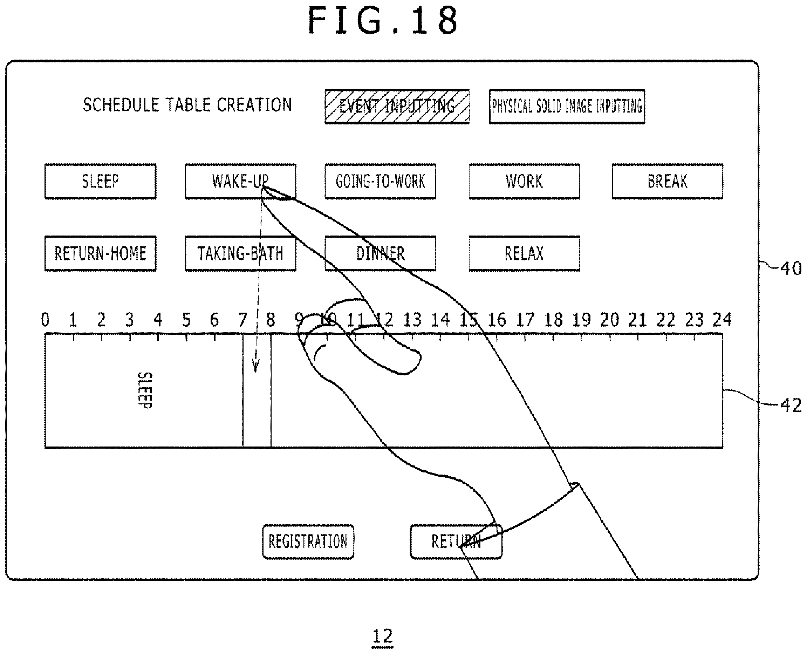

   FIG. 18 is a view illustrating a behavior of placing an event name into a table region by a drag operation.
[FIG. 19]

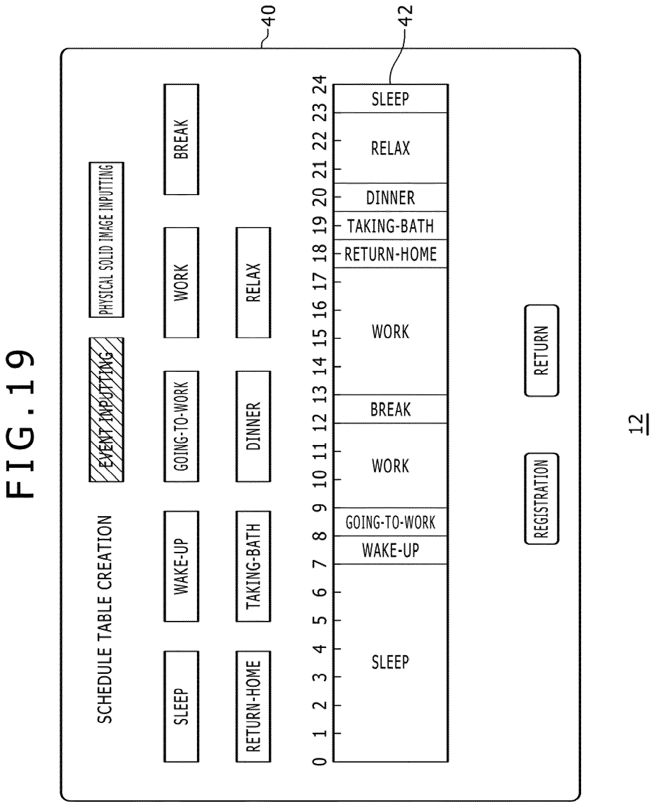

   FIG. 19 is a view depicting a state in which an event name is allocated to a table region.
[FIG. 20]

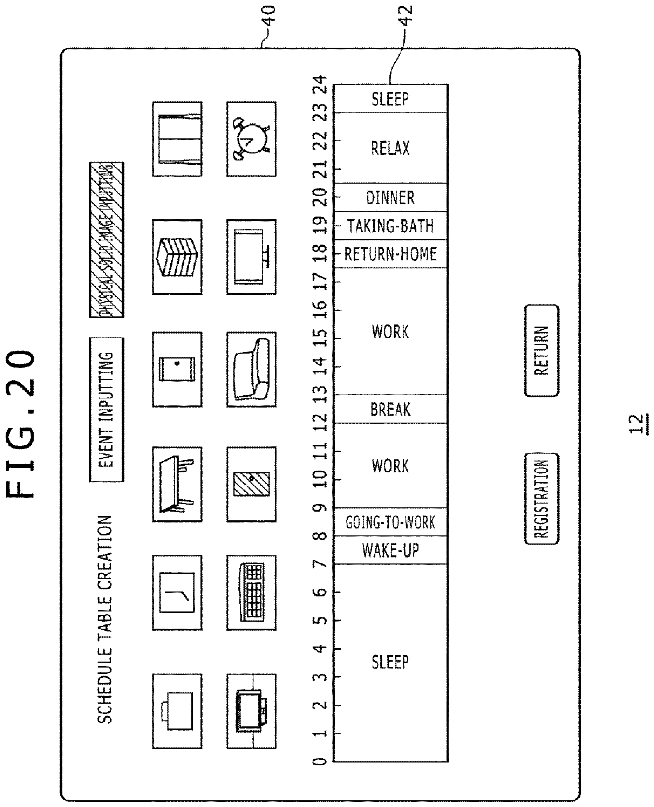

   FIG. 20 is a view depicting another schedule table creation screen image.
[FIG. 21]

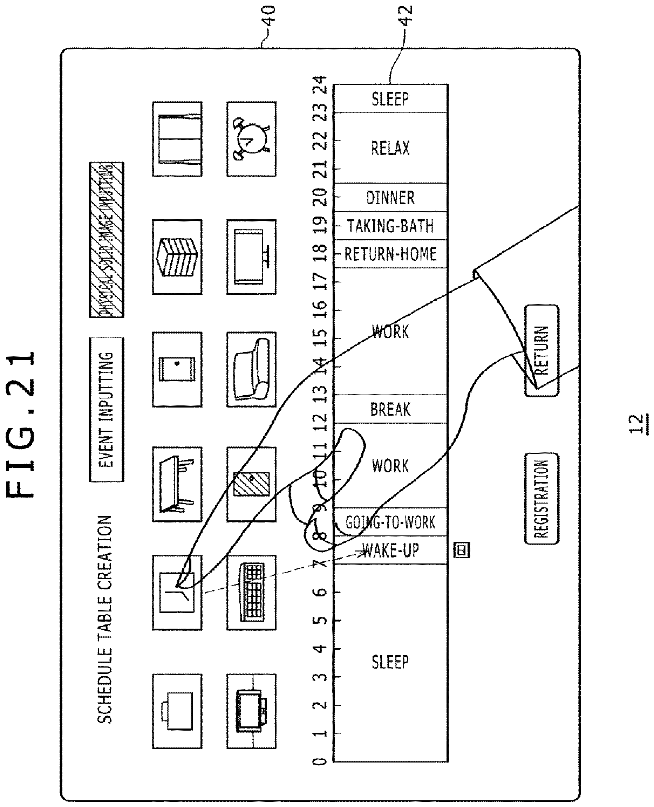

   FIG. 21 is a view illustrating a behavior of associating a physical solid image with an event name disposed in a table region by a drag operation.
[FIG. 22]

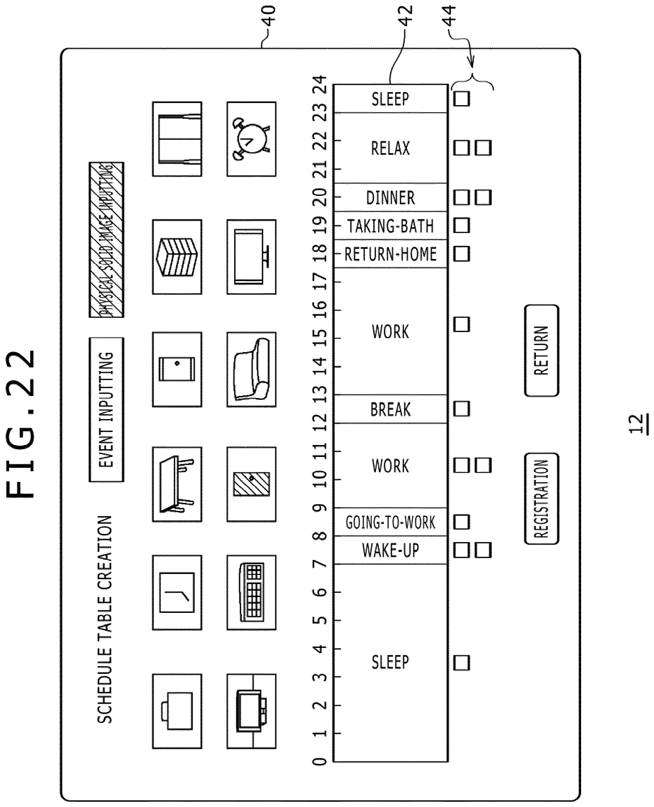

   FIG. 22 is a view depicting a state in which a physical solid image is allocated to an event.
[FIG. 23]

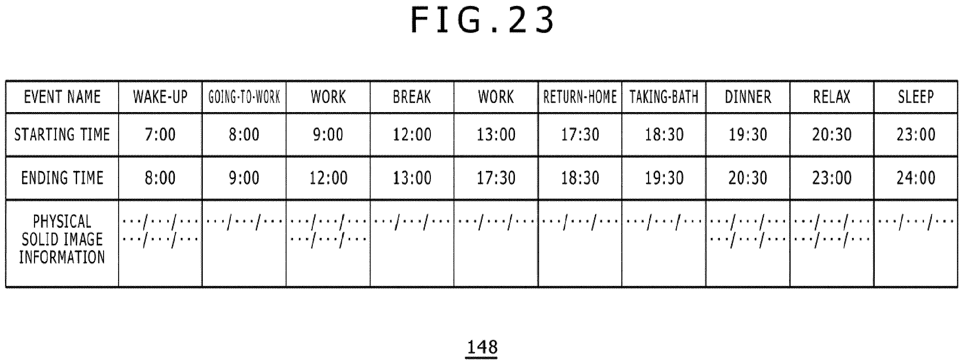

   FIG. 23 is a view depicting an example of a schedule table.
[FIG. 24]

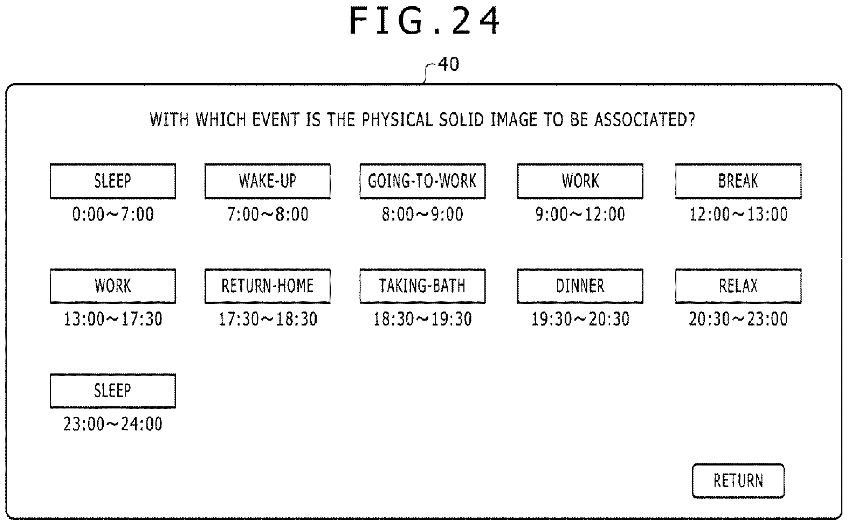

   FIG. 24 is a view depicting a selection screen image of an event.
[FIG. 25]

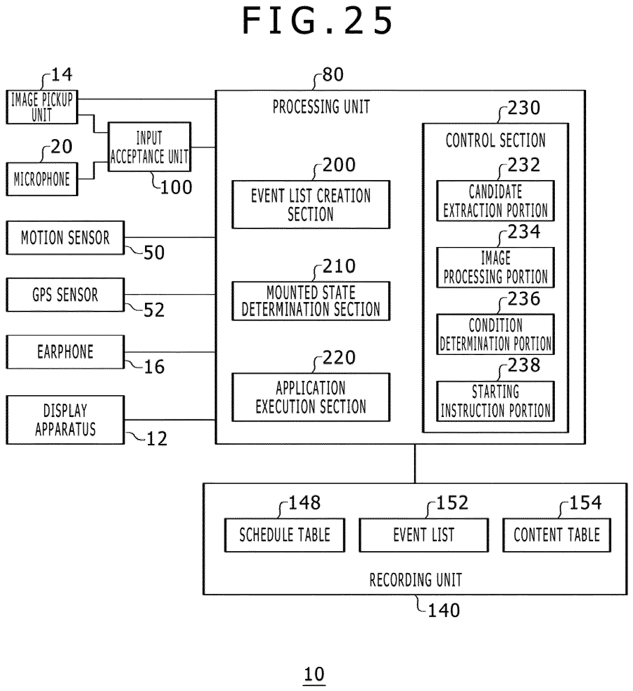

   FIG. 25 is a view depicting a functional block diagram for implementing an application processing function of the information processing apparatus.
[FIG. 26]

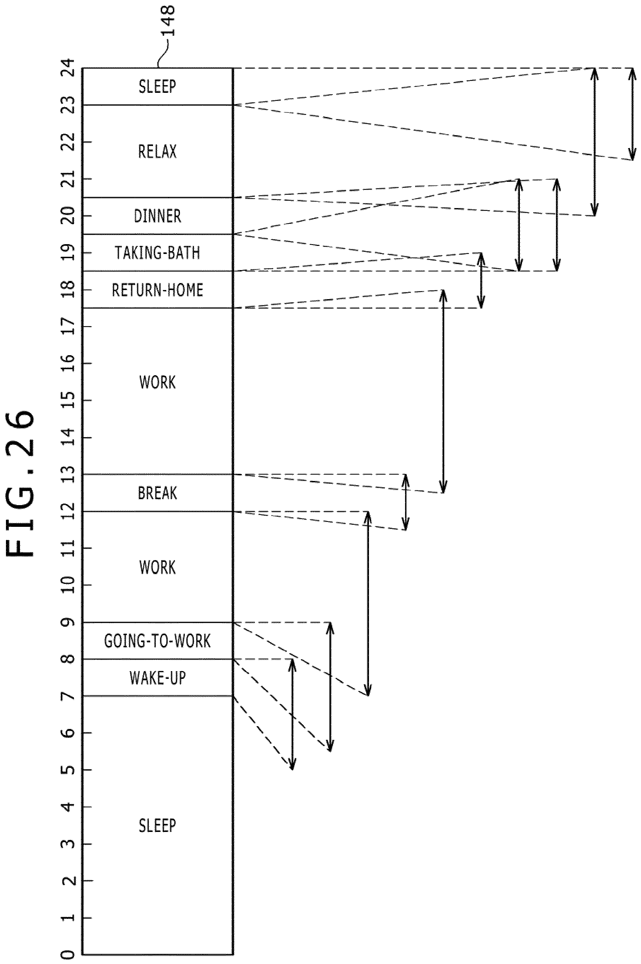

   FIG. 26 is a view illustrating an event list.
[FIG. 27]

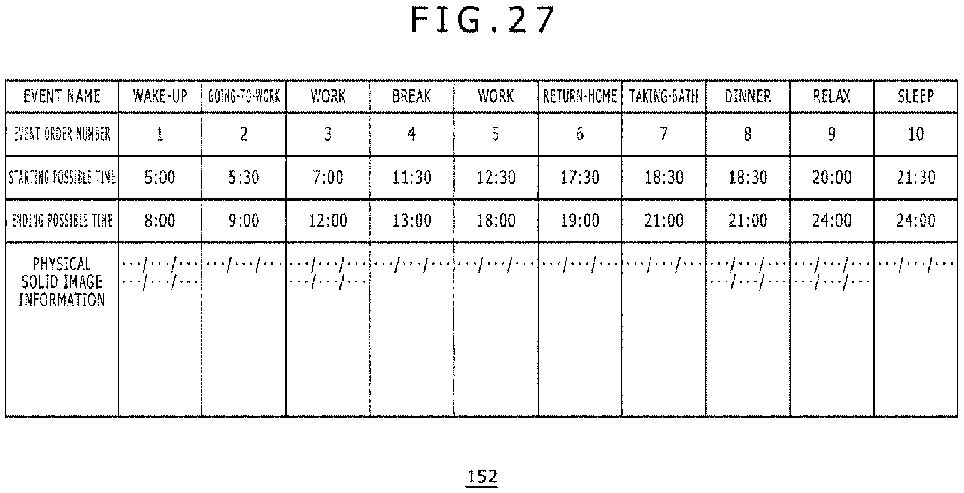

   FIG. 27 is a view depicting an example of an event list.
[FIG. 28]

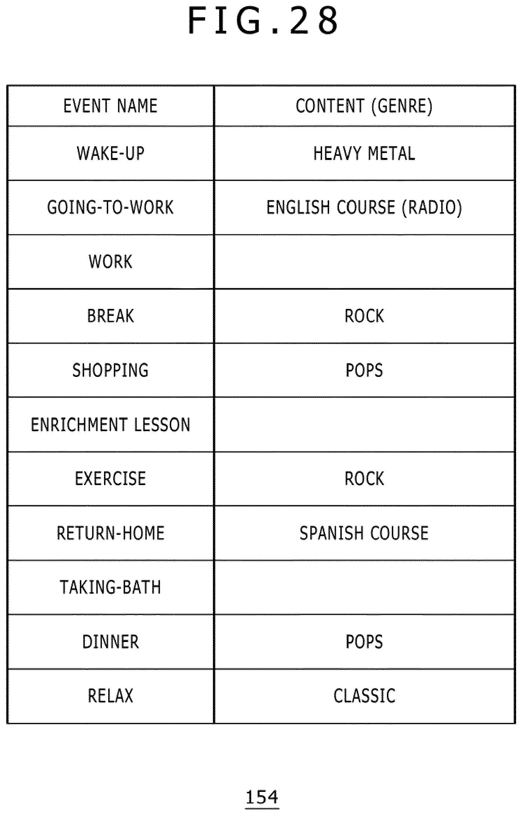

   FIG. 28 is a view depicting a content table which associates events and contents with each other.

### [Description of Embodiment]

Information presented to a user in the augmented reality (AR) technology is called annotation and is visualized using virtual objects of various forms such as a text, an icon, or an animation. However, where the AR technology is utilized for advertisement, a virtual object for advertisement is displayed in a superposed relationship on a wall face of a building, a signboard or the like in a real space. Meanwhile, where the AR technology is used for road guide, a virtual object, a map or the like for road guide is displayed in a superposed relationship on a physical solid or on a road which serves as a mark in the real world.

In such an AR application as described above, a marker is registered first, and then an image of a real physical solid corresponding to the marker is picked up to start up a process (service) associated with the marker. The inventor of the present invention has paid attention to the fact that, if a user can individually register a marker, then the application can be customized and processed by the user, and has come to develop a user interface for allowing a user to register a marker readily and simply. Further, the inventor of the present invention has paid attention also to the fact that, by providing, after a registered marker and a real physical solid image are compared with each other, an application of a different type to the user in addition to a visual annotation, the possibility of the AR technology can be expanded. In the following, the present invention is described in connection with an embodiment thereof.

FIG. 1 is a view schematically depicting an example of an appearance of an information processing apparatus according to the embodiment. An information processing apparatus 10 includes a housing 18 which accommodates a display apparatus 12 for presenting a virtual object such as a visual user interface, an image pickup unit 14, an earphone 16, a microphone (not depicted) and various modules. The information processing apparatus 10 of the present embodiment is a wearable computer and may be configured as a video observation device having an optical transmission type HMD. However, the information processing apparatus 10 may be configured as a terminal apparatus which includes an image pickup apparatus such as, for example, a portable telephone set or a personal digital assistant (PDA). The information processing apparatus 10 has a function of allowing a user to observe a video which represents a virtual object in a superposed relationship with the real space. The image pickup unit 14 picks up an image around the user who wears the information processing apparatus 10 periodically (for example, by 30 images/second or 60 images/second). The earphone 16 outputs sound, and the microphone acquires voice uttered by the user or environmental sound existing in the real space.

In the present embodiment, the display apparatus 12 is an optical transmission type HMD configured from a half mirror, and the user can view the real space in a see-through fashion through the display apparatus 12 and can further view a video (virtual object) created by the information processing apparatus 10. The information processing apparatus 10 may otherwise create a stereoscopic image. The display apparatus 12 may be a display apparatus which uses a holographic element to project a video on a light guide plate or a display apparatus of the projection type which forms a virtual image so as to allow a video to be viewed. It is to be noted that the display apparatus 12 may otherwise be a video transmission type HMD and may display, while it displays a real space image picked up by the image pickup unit 14, a virtual object created by the information processing apparatus 10 in a superposed relationship with the real space image.

In this manner, the information processing apparatus 10 may be an information processing apparatus of the mounted type which presents the real space as an environment of the user to the user and displays a virtual object in a peripheral environment of the real space.

In the present embodiment, the "real physical solid" signifies a substance which exists in the real space, and the "virtual object" signifies an object created by the information processing apparatus 10. Where the display apparatus 12 is an optical transmission type HMD, a real physical solid can be observed in a see-through fashion through the optical transmission type HMD by the user. It is to be noted that, where an image of a real physical solid is cut out from a picked up image and the information processing apparatus 10 displays the cutout image at an arbitrary position of the display apparatus 12, the real physical solid image is handled as virtual object.

The display apparatus 12 has a form of a pair of glasses, and an image for the right eye is displayed on the right glass while an image for the left eye is displayed on the left glass. Consequently, the user can observe a stereoscopic image. It is to be noted that the display apparatus 12 in the embodiment may not necessarily have a mechanism for providing a stereoscopic image but may have only one glass for one eye.

The image pickup unit 14 is provided between the two eyeglass type display members so as to be disposed in the middle of the forehead when the information processing apparatus 10 is mounted on the user and picks up an image of the real space included in the field of view of the user. Although the angle of view of the image pickup unit 14 preferably coincides with or equivalent to the angle of view of a human being, the angle of view of the image pickup unit 14 in the information processing apparatus 10 of the type depicted in FIG. 1 is sometimes smaller than the angle of view of the human being. The image pickup unit 14 can be implemented using a known solid-state image pickup device such as, for example, a charge coupled device (CCD) image sensor or a complementary metal oxide semiconductor (CMOS) image sensor.

The housing 18 plays a role of a glasses frame of the information processing apparatus 10 in the form of glasses and accommodates therein various modules used by the information processing apparatus 10. The modules used by the information processing apparatus 10 include a module for implementing an optical transmission type HMD, a module for creating a three-dimensional video (virtual object), a communication module for carrying out a communication process by the Bluetooth (registered trademark) protocol, the IEEE802.11 protocol, or the mobile communication protocol, a module for sound outputting, an electronic compass, an acceleration sensor, an inclination sensor, a global positioning system (GPS) sensor, an illuminance sensor and so forth. The modules mentioned are exemplary, and the information processing apparatus 10 need not necessarily include all of the modules mentioned. Which one or ones of the modules are to be incorporated may be determined in response to scenes assumed to be used by the information processing apparatus 10.

While the information processing apparatus 10 depicted in FIG. 1 has a form of glasses, various variations are possible such as a form of a cap, a form of a belt which allows the information processing apparatus 10 to surround the head of the user and be fixed to the head, or a form of a helmet which covers the entire head of the user. The information processing apparatus 10 of the present embodiment may have any of the forms. It is to be noted that, while the forms mentioned are examples of the form of a mounted type wearable computer, also a portable telephone set, a portable game machine and so forth can be listed as forms of the information processing apparatus 10.

In the present embodiment, the information processing apparatus 10 provides a user interface which can be handled readily by the user and has a function of providing a content in response to a behavior of the user. It is to be noted that a content provided to the user may be that retained in a recording unit of the information processing apparatus 10 or may be distributed from an external apparatus such as a content server or a terminal apparatus. In the following, an environment in which a content is distributed from an external apparatus to the information processing apparatus 10 is described.

FIG. 2 is a view schematically depicting an information processing system according to the embodiment. An information processing system 1 includes a terminal apparatus 2 having a communication function, a content server 4 for distributing a digital content, an access point (hereinafter referred to as "AP") 5 having functions of a wireless access point and a router, and a base station 6 for mobile telephone communication. The content server 4, the AP 5, and the base station 6 are connected to a network 3 such as the Internet. The information processing apparatus 10 has a communication function and acquires a content from the terminal apparatus 2 and/or the content server 4. The information processing apparatus 10 may receive a content by Bluetooth (registered trademark) protocol communication from the terminal apparatus 2. Alternatively, the information processing apparatus 10 may establish connection by the IEEE802.11 protocol with the AP 5 and receive a content from the content server 4 through the AP 5. Alternatively, the information processing apparatus 10 may establish connection by the mobile communication protocol with the base station 6 and receive a content from the content server 4 through the base station 6. In this manner, the information processing apparatus 10 can acquire a content from an external apparatus.

An outline of functions of the information processing apparatus 10 is described. It is to be noted that the following description is given taking a case in which the display apparatus 12 is an optical transmission type HMD with which the user can view the real space in a see-through fashion as an example. The information processing apparatus 10 incorporates an AR application and has a function of displaying a virtual object on the display apparatus 12.

The information processing apparatus 10 can process an application in response to the situation of the user. Here, the process of an application includes to start up and execute an application in response to the situation of the user and to execute a content in response to the situation of the user in a particular application. For example, the former includes to start up and execute an application for the notification of congestion information of roads, delay information of trains, today's weather forecast or the like before the user goes to work in the morning, to start up and execute an application for reproducing music while the user is going to work after leaving the own home and so forth. Meanwhile, the latter includes, for example, to reproduce music for good awakening before the user goes to work in the morning, streaming reproduce a radio program of a foreign language for study of the foreign language when the user is going to work and so forth. The information processing apparatus 10 of the embodiment retains an event list which associates events, time information, and physical solid image information with each other, and decides, if an image corresponding to the physical solid image information is included in a real space image picked up by the image pickup unit 14 within a time zone specified by the time information, that a starting condition for the event is satisfied and then starts processing of an application associated with the event.

In order to implement the functions described above in a high efficiency, the information processing apparatus 10 provides a user interface for creating a schedule table for one day of the user. Generally, in a schedule table, start time and end time of an event are set in an associated relationship with the event. However, in the schedule table in the present embodiment, physical solid image information for determining establishment of an event starting condition is registered.

Although the event list may be same as the schedule table created by the user, preferably it is created by working the schedule table as hereinafter described in detail. The information processing apparatus 10 which is a video observation device includes the image pickup unit 14. If the image pickup unit 14 picks up an image of a real physical solid corresponding to physical solid image information registered in the event list, then it is decided that a starting condition for the event associated with the physical solid image information is satisfied.

In the following, a user interface for implementing a basic operation for making it possible for the user to create a schedule table simply and easily is described.

### <User Interface Providing Function>

FIG. 3 depicts functional blocks for implementing a user interface providing function of the information processing apparatus 10. The information processing apparatus 10 includes a display apparatus 12, an image pickup unit 14, and a microphone 20 which provide inputting and outputting functions. Further, the information processing apparatus 10 includes an input acceptance unit 100 for converting an input from the image pickup unit 14 and the microphone 20 into operation information, a processing unit 80 for carrying out various processes, and a recording unit 140 for recording data. The processing unit 80 includes an image processing section 110, a display processing section 120, and a schedule registration section 150. While the components mentioned are implemented by a CPU of an arbitrary computer, a memory, a program loaded in the memory, a storage and so forth, functional blocks implemented by the components are depicted in FIG. 3. Accordingly, it is recognized by those skilled in the art that the functional blocks mentioned can be implemented in various forms only by hardware, only by software, or by a combination of hardware and software. It is to be noted that the recording unit 140 may be configured from a flash memory, an HDD or the like. It is to be noted that, while it is assumed that, in the embodiment, the functional blocks depicted in FIG. 3 are provided in the information processing apparatus 10, part of the functional blocks depicted in FIG. 3 may be implemented by the terminal apparatus 2 as hereinafter described.

The input acceptance unit 100 accepts information inputted from the image pickup unit 14 or the microphone 20. From the microphone 20, sound information is inputted, and the input acceptance unit 100 includes a speech recognition function and recognizes speech from the user to create operation information. The created operation information is provided to processing modules such as the display processing section 120, the image processing section 110, and/or the schedule registration section 150.

Further, if the input acceptance unit 100 receives picked up images picked up by the image pickup unit 14, then it detects a gesture of the user included in the picked up images, creates operation information from the gesture and provides the created operation information to processing modules such as the display processing section 120, the image processing section 110, and/or the schedule registration section 150. In the present embodiment, since the image pickup unit 14 is disposed in the proximity of the middle of the forehead of the user, a movement of a physical solid whose gesture is recognized by the input acceptance unit 100 is a movement of a hand or a movement of a finger in the proximity of the direction of the line of sight of the user. It is to be noted that the input acceptance unit 100 may register a physical solid of a predetermined shape as a gesture recognition physical solid such that, when the user moves the physical solid within the angle of view of the image pickup unit 14, the input acceptance unit 100 detects a gesture. In the following, an example wherein the input acceptance unit 100 detects a movement of a hand or a finger of the user who is a gesture recognition physical solid to create operation information is described. The input acceptance unit 100 starts the gesture recognition process when it detects a start of a gesture inputting mode and ends the gesture recognition process when it detects an end of the gesture inputting mode.

FIG. 4 depicts an example of a picked up image picked up by the image pickup unit 14. The image pickup unit 14 picks up an image of the real space with a predetermined angle of view including the direction of the line of sight of the user on whom the information processing apparatus 10 is mounted. For example, FIG. 4 depicts an image in which a manner of a living room of an own home of the user is imaged. It is to be noted that a region surrounded by a broken line in the picked up image is set as a gesture recognition region 30 for recognizing a movement (gesture) of a hand or a finger of the user.

FIG. 5(a) and 5(b) are views illustrating a detection process of a start of a gesture inputting mode. FIGS. 5(a) and 5(b) depict examples in which a start of a gesture inputting mode is decided in different conditions.

FIG. 5(a) depicts a manner in which a hand of the user advances into the gesture recognition region 30. When the input acceptance unit 100 detects that a hand of the user is included in the gesture recognition region 30 of a picked up image, then it decides that the starting condition for the gesture inputting mode is satisfied and starts a gesture recognition process. It is to be noted that, where the gesture recognition region 30 occupies the full area of the picked up image, that a hand of the user enters the frame is equivalent to that this is set as the starting condition for the gesture inputting mode.

FIG. 5(b) depicts a manner in which a hand imaged in the gesture recognition region 30 carries out a predetermined behavior. If the input acceptance unit 100 detects that the hand of the user included in the gesture recognition region 30 of the picked up image carries out a predetermined behavior, then it decides that the starting condition for the gesture inputting mode is satisfied and starts a gesture recognition process. It is to be noted that the predetermined behavior includes that the user puts the hand into a predetermined pose or that the hand of the user carries out a predetermined continuous movement.

If the input acceptance unit 100 recognizes a movement of a hand in the gesture recognition region 30 as described above and the movement satisfies the starting condition for a gesture inputting mode, then the input acceptance unit 100 starts a gesture recognition process. It is to be noted that the following description is given under the assumption that the "hand" includes the entire hand or a finger or fingers of the hand.

After the gesture inputting mode is started, a menu screen image is displayed in the AR display region of the display apparatus 12. Consequently, the user is allowed to view the menu screen image displayed on the display apparatus 12 while viewing the real space. It is to be noted that a virtual object displayed in the AR display region such as the menu screen image is positioned at a corresponding position in the gesture recognition region 30 in the real space.

A relationship between the AR display region of the display apparatus 12 and the gesture recognition region 30 of the picked up image is described. The AR display region is a region in which the user views a virtual image in a superposed relationship in the real space which spreads as the background of the display apparatus 12. The user would carry out an inputting operation using a hand or a finger to the displayed virtual object. Since this inputting operation must be imaged by the image pickup unit 14, the virtual object must be virtually disposed in the angle of view of the image pickup unit 14 and further must be virtually disposed in the gesture recognition region 30. Therefore, while the AR display region of the display apparatus 12 and the gesture recognition region 30 of the picked up image have spatial coordinate systems independent of each other, they must be superposed with each other and preferably are the same image region. The following description is given under the assumption that the AR display region and the gesture recognition region 30 have the same region in the real space.

FIG. 6 is a view illustrating a placement position of a menu screen image 32. It is to be noted that FIG. 6 depicts part of the display region of the display apparatus 12 and here depicts a region same as that of the picked up image. Usually, the actual display region of the display apparatus 12 is greater than that depicted in FIG. 6. It is to be noted that FIG. 6 is an explanatory view merely for indicating that the menu screen image 32 is observed in a superposed relationship with the real space observed by the user. Also it is to be noted that, in FIG. 6, what is displayed on the display apparatus 12 is only the menu screen image 32, and the background of the living room except the menu screen image 32 is a scene directly viewed by the user through the display apparatus 12 which is a half mirror.

FIG. 7(a) depicts a manner in which the user carries out a click gesture. In the information processing apparatus 10, a click operation is utilized as an operation for settling two-dimensional AR display coordinates. For example, when a virtual object such as an icon is displayed on the display apparatus 12, the user can select the virtual object by carrying out a click gesture for the virtual object.

The input acceptance unit 100 determines that a click gesture is carried out when a hand moves back and forth in the direction of the optical axis of the image pickup unit 14, namely, in the depthwise direction. Where the image pickup unit 14 is configured from a stereo camera, the input acceptance unit 100 can detect a movement of a hand in the depthwise direction from a parallax amount between the images of the hand. On the other hand, where the image pickup unit 14 is configured from a monocular camera, it is possible to detect a variation of the magnitude of the hand to detect a movement of the hand in the depthwise direction. It is to be noted that the information processing apparatus 10 may include a distance sensor to detect a movement of the hand in the depthwise direction from measurement values of the distance sensor. If the input acceptance unit 100 detects a click gesture successively twice, then it determines that a double click operation is carried out.

If the input acceptance unit 100 detects a click gesture in the gesture recognition region 30, then it transmits information representing that a click operation is carried out to the processing modules such as the display processing section 120, the image processing section 110, and/or the schedule registration section 150 together with two-dimensional AR display coordinate values at which the click operation is carried out. The input acceptance unit 100 converts the two-dimensional coordinate values at which the click gesture is carried out in the gesture recognition region 30 into two-dimensional AR display coordinate values. The input acceptance unit 100 has a function of converting two-dimensional coordinate values on a picked up image into two-dimensional AR display coordinate values in this manner and transmitting the two-dimensional AR display coordinate values to the processing modules. In the following description, such conversion and transmission of the coordinate values are omitted.

FIG. 7(b) depicts a manner in which the user performs a drag gesture. In the information processing apparatus 10, a drag operation is utilized as an operation for moving a virtual object displayed on a two-dimensional or three-dimensional AR coordinate system. Where a virtual object is displayed on the display apparatus 12, the user can move the virtual object by carrying out a drag gesture for the virtual object.

When a hand moves vertically, horizontally, and obliquely on an AR coordinate system, the input acceptance unit 100 determines that a drag gesture is carried out. If the input acceptance unit 100 detects a drag gesture in the gesture recognition region 30, then it transmits information representing that a drag operation is carried out to the processing modules such as the display processing section 120, the image processing section 110, and/or the schedule registration section 150. It is to be noted that the drag operation is carried out for a virtual object selected by a click operation. Accordingly, the input acceptance unit 100 specifies a virtual object for which a click gesture is carried out and then transmits, when a drag gesture is carried out for the virtual object, drag operation information for the virtual object to a predetermined processing module or modules. It is to be noted that the input acceptance unit 100 recognizes an end of a drag operation when a click gesture is carried out for the virtual object.

FIG. 8(a) depicts a manner in which a user carries out a zoom-in gesture. In the information processing apparatus 10, a zoom-in operation is utilized as an operation for expanding a virtual object displayed on a two-dimensional or three-dimensional AR coordinate system. When a virtual object is displayed on the display apparatus 12, the user can cause the virtual object to be displayed in an enlarged scale by carrying out a zoom-in gesture for the virtual object.

The input acceptance unit 100 decides that a zoom-in gesture is carried out when the distance between two fingers is expanded on the AR coordinate system. If the input acceptance unit 100 detects a zoom-in gesture in the gesture recognition region 30, then it transmits information representing that a zoom-in operation is carried out to the processing modules such as the display processing section 120, the image processing section 110, and/or the schedule registration section 150. It is to be noted that the zoom-in operation is carried out for a virtual object selected by a click operation. Accordingly, the input acceptance unit 100 specifies a virtual object for which a click gesture is carried out and transmits, when a zoom-in gesture is carried out for the virtual object, zoom-in operation information for the virtual object to the predetermined module or modules. It is to be noted that the input acceptance unit 100 recognizes an end of the zoom-in operation when a click gesture for the virtual object is carried out.

FIG. 8(b) depicts a manner in which the user carries out a zoom-out gesture. In the information processing apparatus 10, a zoom-out operation is utilized as an operation for reducing a virtual object displayed on a two-dimensional or three-dimensional AR coordinate system. When a virtual object is displayed on the display apparatus 12, the user can cause the virtual object to be displayed in a reduced scale by carrying out a zoom-out gesture for the virtual object.

The input acceptance unit 100 decides that a zoom-out gesture is carried out when the distance between two fingers is reduced on the AR coordinate system. If the input acceptance unit 100 detects a zoom-out gesture in the gesture recognition region 30, then it transmits information representing that a zoom-out operation is carried out to the processing modules such as the display processing section 120, the image processing section 110, and/or the schedule registration section 150. It is to be noted that the zoom-out operation is carried out for a virtual object selected by a click operation. Accordingly, the input acceptance unit 100 specifies a virtual object for which a click gesture is carried out and transmits, when a zoom-out gesture is carried out for the virtual object, zoom-out operation information for the virtual object to the predetermined module or modules. It is to be noted that the input acceptance unit 100 recognizes an end of the zoom-out operation when a click gesture for the virtual object is carried out.

FIGS. 9(a) and 9(b) are views illustrating a detection process of an end of a gesture inputting mode. FIGS. 9(a) and 9(b) depict examples in which an end of a gesture inputting mode is determined in different conditions.

FIG. 9(a) depicts a manner in which a hand of the user is retracted from the gesture recognition region 30. If the input acceptance unit 100 detects during execution of a gesture recognition process that a hand of the user is no more included in the gesture recognition region 30, then it determines that an ending condition for the gesture inputting mode is satisfied and ends the gesture recognition process.

FIG. 9(b) detects a manner in which a hand imaged in the gesture recognition region 30 carries out a predetermined behavior. If the input acceptance unit 100 detects during execution of a gesture recognition process that a hand of the user included in the gesture recognition region 30 of the picked up image carries out a predetermined behavior, then it determines that an ending condition for the gesture inputting mode is satisfied and ends the gesture recognition process. It is to be noted that the predetermined behavior includes that the user places a hand into a predetermined pose or that the user carries out a predetermined continuous movement.

If the gesture inputting mode is ended, then the menu screen image or the like displayed in the AR display region of the display apparatus 12 disappears.

It is to be noted that, as hereinafter described, in the interface in the present embodiment, by selecting an item included in the menu screen image, a menu screen image of a lower layer is opened, and a process relating to an item included in the lower layer menu screen image is executed. In this manner, various processes are carried out successively. Therefore, when an ending condition for the gesture inputting mode relating to FIG. 9(a) or FIG. 9(b) is satisfied, it may not be preferable to immediately erase the menu screen image or the currently displayed interface from the display apparatus 12. Therefore, when an ending condition for the inputting mode is established, a confirmation message for allowing the user to confirm that the inputting mode is to be ended may be displayed on the display apparatus 12 such that, only when the user issues a reply of OK explicitly, the virtual object is erased from the display apparatus 12.

Further, since the ending condition relating to FIG. 9(a) is satisfied when a hand of the user frames out, it is considered that the possibility that the ending condition may be satisfied without intention is high. Therefore, the frame-in relating to FIG. 5(a) may be adopted as the starting condition for the inputting mode while the frame-out relating to FIG. 9(a) is not adopted for the ending condition. In this case, as the ending condition, that relating to FIG. 9(b) may be adopted. It is to be noted that, if the starting condition for the frame-in relating to FIG. 5(a) is satisfied and then the ending condition for frame-out relating to FIG. 9(a) is satisfied within a predetermined period (for example, within several seconds), then since the possibility that a hand of the user accidentally may frame in without an intention to start a gesture inputting mode is high, the gesture recognition process may be ended without presenting the confirmation message.

In this manner, the information processing apparatus 10 provides a user interface for handling a gesture of the user as an operation input. It is to be noted that the input acceptance unit 100 may detect a gesture other than the examples described above, for example, a turning gesture of a hand to create turning operation information of a virtual object. In this manner, the input acceptance unit 100 can detect a movement of a gesture recognition object to create operation information of the user. It is to be noted that, as described hereinabove, the input acceptance unit 100 may analyze the voice inputted from the microphone 20 to create operation information of the user. For example, if the user utters "click," then the input acceptance unit 100 accepts the utterance information from the microphone 20 and creates and transmits click operation information to the predetermined processing module or modules.

The information processing apparatus 10 of the present embodiment creates an event list from a schedule table in which a schedule of events within one day of the user is set. Although details of the event list are hereinafter described, if the information processing apparatus 10 determines establishment of a starting condition for an event on the basis of the event list, then the information processing apparatus 10 carries out processing of an application associated with the event. The starting condition for the event is that, within a time zone of the event registered in the event list, an image of a real physical solid corresponding to physical solid image information associated with the event is picked up by the image pickup unit 14. In order to allow such processing, the event list is configured by associating time information and physical solid image information with events.

In order to create an event list, also a schedule table on which the event list is based is set by the user by associating time information and physical solid image information with events. In the following, an example of a procedure for creating such a schedule table as just described is described. In the following example, the user would first collect physical solid images for being associated with events, and then carries out, when a schedule table is to be created, a work of specifying the time information of the events and associating the events and the collected physical solid image information with each other.

If the input acceptance unit 100 detects a gesture depicted in FIG. 5(a) or FIG. 5(b), then it determines that the starting condition for a gesture inputting mode is satisfied and notifies the display processing section 120 of such establishment. In the display processing section 120, a menu displaying portion 122 creates the menu screen image 32 depicted in FIG. 6 and displays the menu screen image 32 on the display apparatus 12. Consequently, the user can observe the menu screen image 32 superposed on the real space.

If the user moves a finger to a position at which it overlaps with the menu screen image 32 displayed on the display apparatus 12 and then carries out a click gesture twice in a region on the space in which "schedule application" is displayed, then the input acceptance unit 100 sends coordinate values of the AR display region of the display apparatus 12 and double click operation information to the display processing section 120. If the menu displaying portion 122 detects from the coordinate values of the AR display region that the menu item "schedule application" is selected, then it displays a menu screen image of a lower layer associated with the "schedule application" in the AR display region.

FIG. 10 depicts an example of a menu screen image of a lower layer. If the "schedule application" on the menu screen image 32 depicted in FIG. 6 is selected, then a menu screen image 34 depicted in FIG. 10 is displayed in place of the menu screen image 32 depicted in FIG. 6. The menu screen image 34 includes menu items "registration of event starting object," "event registration," "schedule creation," and "schedule editing."

If the user carries out a double click gesture on the displaying region of the "registration of event starting object" on the menu screen image 34 displayed on the display apparatus 12, then the input acceptance unit 100 sends double click operation information and the AR display region coordinate values to the image processing section 110 and the display processing section 120. It is to be noted that "on the displaying region" signifies on a display region in the virtual space represented by the display apparatus 12. If the menu displaying portion 122 detects that the menu item "registration of event starting object" is selected, then it displays a menu screen image of a lower layer associated with the item on the display apparatus 12, and the image processing section 110 starts a process for specifying a real physical solid image included in the picked up image.

FIG. 11 depicts an example of a menu screen image of a lower layer. If the "registration of event starting object" is selected on the menu screen image 34 depicted in FIG. 10, then a menu screen image 36 depicted in FIG. 11 is displayed. The menu screen image 34 includes menu items "freehand rendering," "direct designation," "image recognition," "automatic physical solid selection," and "registration."

FIG. 12 depicts a scene which is observed through the display apparatus 12 by the user. As described hereinabove with reference to FIG. 6, also FIG. 12 depicts part of the display region (region same as that of the picked up image) of the display apparatus 12, and the actual display region of the display apparatus 12 is normally greater than that depicted in FIG. 12. Further, what is displayed on the display apparatus 12 in FIG. 12 is only the menu screen image 36, and the background of the living room except this is a scene which is viewed directly by the user through the display apparatus 12 which is a half mirror.

If the user carries out a double click gesture on the display region of the "freehand rendering," then an inputting mode by freehand is started. If the user operates, in the inputting mode, a finger in such a manner as to surround a physical solid to be cut out, then a locus displaying portion 130 displays the locus of the finger as a virtual object on the display apparatus 12 in such a manner as to follow up the movement of the finger. A start and an end of inputting of "freehand rendering" are determined by click gestures of the user. Accordingly, if the user performs a click gesture once at a start point of a free curve and then performs a click gesture after the finger is moved to surround the physical solid, then the free curve is settled.

FIG. 13 depicts a locus 38 which surrounds a clock. If the locus 38 surrounds the clock in this manner, then the input acceptance unit 100 notifies the image processing section 110 that the free curve is settled, and in response to the notification, a real physical solid specification portion 112 specifies the real physical solid image selected by the user. In particular, the real physical solid specification portion 112 acquires a picked up image from the image pickup unit 14 and specifies an image surrounded by the locus 38 in the picked up image and then extracts the real physical solid image included principally in the specified image. At this time, the input acceptance unit 100 may provide information relating to the imaged locus of the finger to the real physical solid specification portion 112. Further, the real physical solid specification portion 112 may convert the information of the locus 38 into coordinate information on the picked up image to specify the image surrounded by the locus 38 on the picked up image. Here, the image of a shelf on which the clock is placed or a wall is scraped off and the image of the clock is extracted.

After the real physical solid specification portion 112 extracts a real physical solid image, it may color the outer profile of the real physical solid image or the overall real physical solid image to notify the user that the extraction process is completed. If the user confirms that the extraction process is completed appropriately, then the user would carry out a double click gesture on the display region of "registration" of the menu screen image 36. Then, the input acceptance unit 100 sends double click operation information to the image processing section 110, and a physical solid image determination portion 114 records the extracted real physical solid image as a physical solid image 144 into the recording unit 140. The physical solid image 144 is used as basic information for determining satisfaction of an event starting condition as hereinafter described.

The physical solid image determination portion 114 may record a mark image corresponding to the extracted real physical solid image as the physical solid image 144 into the recording unit 140. In the recording unit 140, a mark data 142 including a mark image corresponding to a physical solid is recorded. The mark data 142 includes a plurality of mark images prepared for the physical solid. Here, the physical solid is the clock, and the mark data 142 includes mark images of various types of clocks. Table clocks include various variations such as, in terms of the shape, vertically elongated clocks, horizontally elongated clocks, and round clocks, in terms of the display method, analog clocks and digital clocks, or in terms of the color, blue clocks, black clocks and so forth. The mark data 142 is prepared so as to cover all of the variations. The physical solid image determination portion 114 may extract a mark image same as or similar to a real physical solid image extracted by the real physical solid specification portion 112 from the mark data 142 and record the extracted mark image as the physical solid image 144 into the recording unit 140.

In particular, if the user performs a double click gesture on the display region of "image recognition" of the menu screen image 36 in the state in which the locus 38 surrounds the clock, then the physical solid image determination portion 114 extracts a mark image same as or similar to the real physical solid image from the mark data 142. Then, the extracted mark image is displayed for user confirmation in the AR display region. If the user looks at the mark image and confirms that the mark image is same as or similar to the clock surrounded by the locus 38, then the user would carry out a double click gesture on the display region of "registration" on the menu screen image 36. Consequently, the physical solid image determination portion 114 records the mark image as the physical solid image 144 into the recording unit 140. The decision of the sameness or similarity may be carried out in accordance with a degree of coincidence calculated from characteristic amounts of the real physical solid image and the mark image. For example, if the physical solid image determination portion 114 extracts a plurality of similar mark images from the mark data 142, then the mark images are displayed for user confirmation in the AR display region so as to allow selection thereof by the user.

It is to be noted that, although it is indicated that the mark data 142 includes mark images of various variations of table clocks, it includes mark images relating to various other objects such as, for example, desks, chairs, trains, buildings, and doors. Preferably, a mark image same as or similar to a picked up real physical solid image is suitably extracted.

In this manner, the physical solid image determination portion 114 determines a real physical solid image or a mark image as the physical solid image 144 and records the physical solid image 144 into the recording unit 140. The user can record a plurality of physical solid images 144 into the recording unit 140 by repeating the work just described.

As described above, in the application for reproducing a content in response to a situation of a user, the physical solid image 144 is a condition for selecting and reproducing music by being picked up. Accordingly, in order to create an event for executing the reproduction application, it is necessary for one physical solid image 144 to be registered in the event list without fail, and by registering a plurality of physical solid images 144, the possibility that one of the physical solid images 144 may be picked up is enhanced, which makes it possible to detect creation of an event with a high degree of accuracy. To this end, preferably the user records many physical solid images 144 into the recording unit 140 in the work for the "registration of event starting object" so that a plurality of physical solid image 144 can be registered for one event. It is to be noted that the physical solid image determination portion 114 may record the entire picked up image picked up by the image pickup unit 14 as the physical solid image 144 into the recording unit 140.

While the foregoing is directed to an example wherein the user designates a real physical solid by a free curve, also it is possible for the user to directly designate a real physical solid. If the user carries out a double click gesture on the display region of the "direct designation" on the menu screen image 36, then a selection mode of a real physical solid by direct designation is started. If the user carries out, in this mode, a click gesture for a real physical solid, then the real physical solid specification portion 112
specifies the real physical solid image selected by the user. In particular, the real physical solid specification portion 112 extracts a real physical solid including space coordinate values for which the click operation is carried out on the picked up image. When the real physical solid image is extracted, the real physical solid specification portion 112 may color the outer profile of the real physical solid image or the overall real physical solid image to notify the user that the extraction process is completed. If a double click gesture is carried out on the display region of "registration" of the menu screen image 36 and the input acceptance unit 100 sends double click operation information to the image processing section 110, then the physical solid image determination portion 114 records the extracted real physical solid image as the physical solid image 144 into the recording unit 140. It is to be noted that the physical solid image determination portion 114 may record a mark image corresponding to the extracted real physical solid image as the physical solid image 144 into the recording unit 140 as described hereinabove.

While the "free hand rendering" and "direct designation" modes are modes in which the user manually selects a real physical solid, the information processing apparatus 10 of the present embodiment prepares also a mode for selecting a real physical solid automatically.

If the user carries out a double click gesture on the display region of "automatic object selection" of the menu screen image 36, then an automatic selection mode of a real physical solid is started. In this mode, the real physical solid specification portion 112 specifies a real physical solid image included in the picked up image. At this time, the real physical solid specification portion 112 preferably selects a real physical solid image having a characteristic factor with respect to a surrounding environment in the picked up image. The characteristic factor here may be that the object has a high contrast to the background color, that the object has a shape greater than the surroundings or the like. For example, in regard to the example of FIG. 4, the clock, the table, a chair in front of the table, the shelf on which the clock is placed or the like is selected as a physical solid having a characteristic factor with respect to the surrounding environment.

FIG. 14 depicts a real physical solid image selected by the real physical solid specification portion 112. The real physical solid specification portion 112 selects the clock, the table, the chair in front of the table, and the shelf on which the clock is placed and causes the display apparatus 12 to display slanting lines on the inner side of the outer profiles of them. Consequently, the user recognizes that the four real physical solids are selected. If the user carries out a double click gesture on the display region of "registration" of the menu screen image 36 and the input acceptance unit 100 sends double click operation information to the image processing section 110, then the physical solid image determination portion 114 records the extracted real physical solid images as physical solid images 144 into the recording unit 140. It is to be noted that the physical solid image determination portion 114 may record mark images corresponding to the extracted real physical solid images as the physical solid image 144 into the recording unit 140 as described hereinabove.

It is to be noted that, where a mark image is recorded as the physical solid image 144, the physical solid image determination portion 114 confirms whether or not a mark image corresponding to a real physical solid image specified by the real physical solid specification portion 112 exists. For example, if a mark image corresponding to the chair in front of the table is not included in the mark data 142, then since a mark image of the chair cannot be recorded into the recording unit 140, the physical solid image determination portion 114 preferably determines so that a slanting line image may not be superposed on the chair. Therefore, creation of a slanting line image by the real physical solid specification portion 112 is preferably carried out after confirmation of the presence of a corresponding mark image by the physical solid image determination portion 114 is carried out.

Further, since the selection process of a real physical solid in the "automatic object selection" mode is carried out irrespective of the will of the user, the user may be able to decide whether or not a real physical solid image specified by the real physical solid specification portion 112 or a mark image of the real physical solid image is to be recorded as the physical solid image 144. For example, it is assumed the chair in front of the table does not exist at the place (in the living room) but exists by chance at the time. Since the physical solid image 144 configures a condition for starting of an event, preferably it is an image of a physical solid which exists on a routine basis. The user can exclude the chair from a candidate for the physical solid image 144 by carrying out a double click gesture on the region to which slanting lines for the chair are applied.

In this manner, by selecting an item of the menu screen image 36, the user can record the physical solid image 144 into the recording unit 140 in various modes.

Here, an example of behaviors within a weekday of the user who is a system engineer is indicated. The user would wake up in the morning, take a breakfast, arrange dressing and go to work in the company. After the user arrives at the company, the user would sit in front of the desk and carry out a programming work while looking at the screen of a personal computer. When a lunch break comes, the user would take a lunch, and after the lunch break ends, the user would begin a work in the afternoon. When leaving time comes, the user would turn off the power of the personal computer and go home. After returning home, the user would take a bath and take a dinner and then enjoy a television program, and when bedtime comes, the user would go to bed. Such actions within one day as just described can be divided into various events.

FIG. 15 depicts an average behavior table of the user. The axis of abscissa of the behavior table indicates time and contents described in the table indicate events. According to the behavior table, the user takes the following behaviors in weekdays.
a) 7:00 to 8:00 wake-up event
   The user wakes up, has breakfast and arranges dressing.
b) 8:00 to 9:00 going-to-work event
   The user leaves the home, gets on a train and goes to the company.
c) 9:00 to 12:00 work event
   The user works in the morning.
d) 12:00 to 13:00 lunch break event
   The user goes out of the company and takes a lunch.
e) 13:00 to 17:30 work event
   The user works in the afternoon.
f) 17:30 to 18:30 return home event
   The user leaves the company and returns home.
g) 18:30 to 19:30 taking-bath event
   The user takes a bath.
h) 19:30 to 20:30 dinner event
   The user takes a dinner.
i) 20:30 to 23:00 relax event
   The user relaxes enjoying a television program or the like to refresh the user itself.
j) 23:00 sleep event
   The user goes to bed.

This behavior table is a typical one in which a situation of the user is specified by an event name and time information. The information processing apparatus 10 of the present embodiment carries out supporting of the user to create such a behavior table as described above as a schedule table.

The information processing apparatus 10 of the present embodiment can process an application in response to a situation of the user. As described hereinabove, the processing of an application includes to start up and execute an application in response to a situation of the user and to execute a content in response to the situation of the user in a particular application. In order to facilitate understandings, in the following description, an example is described wherein the information processing apparatus 10 selects and reproduces a content in response to a situation of the user in a sound reproduction application.

If an event starting condition is satisfied, then the information processing apparatus 10 specifies a situation of the user and reproduces a content associated with the event. Since the starting condition of the event includes that a real image corresponding to physical solid image information associated with the event is picked up by the image pickup unit 14, it is necessary for the user to record a physical solid image 144 relating to the event in advance into the recording unit 140.

Thus, the user registers, for each of the events a) to j), a physical solid image 144 which defines a starting condition for the event into the recording unit 140.

### a) Wake-up event

The user would wake up from the bed in the morning and wear the information processing apparatus 10 and then take a breakfast in the living room. After the breakfast, the user would change into outside clothes and read a newspaper until departure time comes. The user would record a physical solid image 144 representing the wake-up event into the recording unit 140. This recording process is carried out by such a technique as described hereinabove in connection with the menu items of the menu screen image 36. However, if the user goes to the living room without fail in the wake-up event, then the physical solid image 144 of a real physical solid (clock, table or the like) existing in the living room may be recorded into the recording unit 140. On the other hand, if the user reads a newspaper without fail, then a physical solid image 144 of a newspaper may be recorded into the recording unit 140. In this manner, preferably the user registers a physical solid image 144 which may be imaged by the image pickup unit 14 with high possibility in the wake-up event in advance. Further, in order that a start of the event is detected at an early stage, preferably the user registers a physical solid image 144 which may be imaged at an early stage of the event with high possibility in accordance with a behavior in the event. In the wake-up event, since the user goes immediately to the living room after wake-up, preferably a physical solid image 144 of a real physical solid existing in the living room is recorded in the recording unit 140. This similarly applies also to the other events.

### b) Going-to-work event

When the going-to-work time comes, the user would take a work bag, open the door of the own home and go out. The user would go to the railway station by bus and go by train from the railway station, and then get off at the nearest railway station to the company and walk from the nearest railway station to the company. The user would record, for example, a physical solid image 144 of the door of the own home or a physical solid image 144 of the outside environment when the door of the own home is opened into the recording unit 140.

### c) Work event

After the user arrives at the company, the user would sit on the own seat and carry out a programming work while observing the display unit and the keyboard. Thus, the user would record a physical solid image 144, for example, of a building in which the company is situated, the entrance of the building, the display unit on the desk, or the keyboard into the recording unit 140.

### d) Lunch break event

When the end time of the work in the morning comes, the user would leave the company and take a lunch in a diner and then return to the company before the start time in the afternoon. The user would record a physical solid image 144, for example, of the entrance of the company building or a physical solid on the way to the diner into the recording unit 140.

### e) Work event

After the user returns to the company, the user would sit on the own seat and carry out a programming work while observing the display unit and the keyboard again. The user would record a physical solid image 144, for example, of the company building, the entrance of the company building, the display unit on the own desk, or the keyboard into the recording unit 140.

### f) Return home event

After the work end time comes, the user would leave the company holding the work bag, walk to the railway station, get on the train, leave the train at the nearest railway station to the own home and then return to the home by bus. The user would record a physical solid image 144, for example, of the work bag, the entrance of the company building, or a physical solid on the way to the railway station into the recording unit 140.

### g) Taking-bath event

After the user returns home, the user would place the work bag in the own room and go to the bath room holding changing clothes. In the bath room, the information processing apparatus 10 is dismounted. After the user uses the bath, the user would wear pajamas and go to the living room. The user would record a physical solid image 144 of the door of the own room, the door of the bath room or the like into the recording unit 140.

### h) Dinner event

In the living room, the user would take a dinner. Similarly as in the a) event, the user would record a physical solid image 144 of the clock, the table or the like into the recording unit 140. It is to be noted that, if the image of any of them is recorded already, then the user need not record a physical solid image 144 of them newly.

### i) Relax event

The user would enjoy a television program lying down on the sofa to refresh the user itself. The user would record a physical solid image 144 of the sofa or the television set into the recording unit 140.

### j) Sleep event

The user would go to the bed room, dismount the information processing apparatus 10 and go to bed. The user would record a physical solid image 144 of the bed, the alarm clock or the like into the recording unit 140.

It is to be noted that, although the example described describes nothing of the sleep event from 0:00 to 7:00, this sleep event may be taken into consideration before the wake-up event.

Referring to FIG. 10, the recording process described above is carried out by selection of the menu item "registration of event starting object" of the menu screen image 34. The user would carry out a work of selecting an item at each image pickup place of an event and recording the physical solid image 144 every time, thereby completing recording of the physical solid images 144.

If the user carries out a double click gesture on the display region of the menu item "event registration" of the menu screen image 34, then the input acceptance unit 100 sends double click operation information and the associated AR display region coordinate values to the display processing section 120. If an event displaying portion 124 detects that the menu item "event registration" is selected, then it displays candidates for an event name which can be used for creation of a schedule table on the display apparatus 12.

FIG. 16 depicts an event candidate presentation screen image. Although event candidates are displayed in an AR display region 40 of the display apparatus 12, the AR display region 40 and the gesture recognition region 30 in the present embodiment overlap with each other. As depicted in FIG. 16, the event displaying portion 124 displays event names to be used in a schedule table for selection by the user. For example, the event displaying portion 124 may prepare event models for individual occupations such that, on the basis of an occupation included in attribute information of the user, event candidates associated with the occupation are displayed in the AR display region 40.

If the user carries out a click gesture on the region in which an event name is displayed, then the input acceptance unit 100 sends click operation information together with the AR display coordinate values of the region to an event determination portion 116, and the event determination portion 116 retains the selected event name. If the user selects all event names to be used for creation of a schedule table, then the user would carry out a click gesture on the display region of "registration." Then, the input acceptance unit 100 sends click operation information together with the AR display coordinate values of the display region of "registration" to the event determination portion 116, and the event determination portion 116 records all of the selected event names as events 146 into the recording unit 140. Here, "sleep," "wake-up," "going-to-work," "work," "break," "return-home," "taking-bath," "dinner," and "relax" are recorded as the events 146.

If the user carries out a double click gesture on the display region of the menu item "schedule creation" of the menu screen image 34, then the input acceptance unit 100 sends double click operation information and the AR display region coordinate values of the display region to the display processing section 120. The display processing section 120 receives the double click operation information and the AR display region coordinate values and provides a user interface for creating a schedule table.

FIG. 17 depicts a schedule table creation screen image. In the AR display region 40, a time axis displaying portion 128 displays a table region 42 which represents the time axis for one day. Although it is to be noted that the table region 42 for 24 hours is displayed in the example depicted in FIG. 17, the time axis displaying portion 128 may display the table region 42 such that a table region for a shorter period of time is displayed and the table region 42 can be scrolled in the time (horizontal) direction.

In the schedule table creation screen image, items "event inputting" and "physical solid image inputting" at the upper stage are provided in order to specify targets to be inputted to the table region 42. In particular, "event inputting" is an item for inputting an event name to the table region 42, and "physical solid image inputting" is an item for inputting a physical solid image to the table region 42. In an initial screen image for schedule table creation, the item "event inputting" is set default, and the event displaying portion 124 reads out the events 146 recorded in the recording unit 140 and displays the recorded event names above the table region 42.

FIG. 18 is a view illustrating an action of placing an event name to the table region 42 by a drag operation. The user would carry out a click gesture on the display region of an event name and move the event name to the table region 42 by a drag operation and then carry out a click gesture, thereby completing the drag operation. The event displaying portion 124 places the event name in the table region 42. The user would click start time and end time of the event in the table region 42 so that the event name may be placed into the time width between the start time and the end time. It is to be noted that the user can shift the horizontal frame of an event name displayed in the table region 42 to the right or the left by a finger, and the start time and the end time of the event may be adjusted thereby. It is to be noted that the event names displayed above the table region 42 remain even if a drag operation thereof is carried out and is not erased.

FIG. 19 depicts a state in which an event name is allocated to the table region 42. If the user carries out a click gesture on the display region of "registration," then the schedule registration section 150 records the event name and the start time and the end time of the event in an associated relationship with each other into the recording unit 140. The event inputting work is completed therewith. Then, if the user carries out a click gesture on the display region of "physical solid image inputting," then the event displaying portion 124 erases the event names displayed above the table region 42, and instead, a physical solid image displaying portion 126 displays the recorded physical solid images 144 above the table region 42.

FIG. 20 depicts a schedule table creation screen image. If the item of "physical solid image inputting" is selected, then the physical solid image displaying portion 126 reads out the physical solid images 144 recorded in the recording unit 140 and displays the recorded physical solid images above the table region 42.

FIG. 21 is a view illustrating an action of associating a physical solid image with an event name placed in the table region 42 by a drag operation. The user would carry out a click gesture on the display region of a physical solid image and move the physical solid image to a particular event in the table region 42 and then carry out a click gesture. The drag operation is completed therewith. If a physical solid image is moved to an event and a drag operation is completed, then the physical solid image displaying portion 126 displays, for example, a reduced screen image of the physical solid image below the event. It is to be noted that the physical solid image displayed above the table region 42 remains even after the drag operation and is not erased.

FIG. 22 depicts a state in which a physical solid image is allocated to an event. In a reduced image displaying region 44, reduced images of allocated physical solid images are displayed for individual events. If the user carries out a click gesture on the display region of "registration," then the schedule registration section 150 records the event names and the physical solid images in an associated relationship with each other into the recording unit 140. The physical solid image inputting work is completed therewith. It is to be noted that, when an event and a physical solid image are to be associated with each other, the physical solid image may have a form of an image file name, a recorded region (path information) of the image file, a characteristic amount of the physical solid image or the like. Only it is necessary for a physical solid image to be associated with an event in any one of the forms, and they are collectively referred to as physical solid image information. The schedule registration section 150 records a schedule table 148, which associates event names, time information, and physical solid images with each other, into the recording unit 140.

FIG. 23 depicts an example of the schedule table 148. In the schedule table 148, time information representative of start time and end time and physical solid image information are recorded in an associated relationship with each event. While the physical solid image information here is indicated as path information of an image file, it may otherwise be an image file name or may be a characteristic amount of the physical solid image. It is to be noted that a characteristic amount of a physical solid image is utilized when it is compared with a characteristic amount of an image included in a picked up image as hereinafter described.

In the schedule table creation work described above, the user records physical solid images 144 in various environments into the recording unit 140 and then allocates events to the table region 42, whereafter the user allocates the physical solid images 144 to the events. In a modification, for example, after events are allocated to the table region 42, physical solid images 144 specified in various environments may be allocated directly to the events.

In this modification, the user would first allocate events to the table region 42 in accordance with the procedure described hereinabove with reference to FIGS. 16 to 19. Then, in various environments, the user would select "registration of event starting object" of the menu screen image 34, and the real physical solid specification portion 112 specifies a real physical solid image from among picked up images. When the real physical solid image is extracted, the real physical solid specification portion 112 colors an outer profile of the real physical solid image or the entire real physical solid image. Then, if the user confirms that the extraction process is completed appropriately, then the user would select "registration" of the menu screen image 36. At this time, the event displaying portion 124 displays a selection screen image for selection of events to be associated on the display apparatus 12.

FIG. 24 depicts an event selection screen image. The event displaying portion 124 reads out events 146 recorded in the recording unit 140 and places the events 146 in a juxtaposed relationship in the AR display region 40 so as to allow selection by the user. At this time, the recording unit 140 reads out also time information of the events and displays the time information in an associated relationship with the events. While, in the present example, two work events are involved, they represent a work event in the morning and a work event in the afternoon. Therefore, by indicating the time information additionally, the user can recognize each work event and consequently can specify an event with which a physical solid image is to be associated. If the user carries out a click operation for an event name, then the schedule registration section 150 automatically associates the physical solid image information with the event. It is to be noted that the physical solid image information to be associated may be information of a file name, path information, a characteristic amount or the like as described hereinabove. With the present modification, when a physical solid image is specified, it can be associated with an event on the spot, and therefore, the user can avoid later labor for the work.

While the foregoing is directed to the examples in which a schedule table is created manually, alto is it possible for the image processing section 110 and the schedule registration section 150 to cooperate with each other to automatically create a schedule table. Also in this automatic creation, it is a prerequisite for the user to associate events and time information with each other in advance through the procedure described hereinabove with reference to FIGS. 16 to 19.

The real physical solid specification portion 112 specifies a real physical solid image included in a picked up image at start time associated with an event. At this time, the real physical solid specification portion 112 preferably specifies a real physical solid image having a characteristic factor with respect to a surrounding environment in the picked up image. The real physical solid specification portion 112 records the specified real physical solid image into the recording unit 140. The real physical solid specification portion 112 specifies and records the real physical solid image for each event into the recording unit 140. The real physical solid specification portion 112 carries out the recording process over a plurality of days. It is to be noted that, if the schedule table for which association between events and time information is performed is for weekdays, then the real physical solid specification portion 112 carries out the recording process over a plurality of weekdays, but if the schedule table is for a holiday, then the real physical solid specification portion 112 carries out the recording process over a plurality of holidays.

After sample images for a plurality of days are recorded into the recording unit 140 in this manner, the real physical solid specification portion 112 extracts real physical solid images picked up frequently for each event. For example, if the number of times by which an image of the clock is picked up in the wake-up event is great, then an image of the clock is extracted as a real physical solid image. By detecting a real physical solid image which is picked up by the greatest number of times at the start time of each event in this manner, the likelihood in that the real physical solid image is included in the starting condition of the event can be raised. In this manner, the real physical solid specification portion 112 specifies a real physical solid image, and the physical solid image determination portion 114 records the specified real physical solid image as the physical solid image 144 into the recording unit 140. It is to be noted that the physical solid image determination portion 114 may record a mark image corresponding to the specified real physical solid image as the physical solid image 144 into the recording unit 140 as described hereinabove. Since the image processing section 110 operates in such a manner as described above, a schedule table which associates events and physical solid images with each other is created while the user need not record a physical solid image manually into the recording unit 140.

It is to be noted that, while, in the example described above, the user sets an event manually or automatically, for example, the information processing apparatus 10 may prepare event models, which associate events for individual occupations and time information with each other, in advance such that the user selects a model in accordance with the own occupation so that an event is set automatically.

If the user carries out a double click gesture on the display region of the menu item "schedule editing" of the menu screen image 34, then the input acceptance unit 100 sends double click operation information and the AR display region coordinate values of the display region to the display processing section 120. The display processing section 120 receives the double click operation information and the AR display region coordinate values and provides a user interface for editing the schedule table. In this user interface, a schedule table editing screen image in which the schedule table created already is displayed in the table region 42 is presented to the user, and the user can edit the schedule table by carrying out such a work as described above.

### <Application Processing Function>

If the user utilizes the user interface to set a schedule table as described above, then the information processing apparatus 10 creates an event list on the basis of the schedule table. The information processing apparatus 10 has an application processing function of using the event list to determine a situation of the user at present and starting processing of the application. In the following, as an example of the application processing function, a case is described in which a sound reproduction application reproduces a content in response to a situation of the user and outputs sound.

FIG. 25 depicts functional blocks for implementing the application processing function of the information processing apparatus 10. The information processing apparatus 10 includes a display apparatus 12, an image pickup unit 14, an earphone 16, and a microphone 20 which provide inputting and outputting functions. Further, the information processing apparatus 10 includes, as a sensor group, a motion sensor 50 and a GPS sensor 52. The motion sensor 50 includes an acceleration sensor and an inclination sensor and outputs measurement values for detecting a movement or a posture of the information processing apparatus 10, and the GPS sensor 52 outputs a measurement value representative of position information of the information processing apparatus 10. Further, the information processing apparatus 10 includes a processing unit 80 for carrying out various processes and a recording unit 140 for recording data. The processing unit 80 has an event list creation section 200, a mounted state determination section 210, an application execution section 220, and a control section 230.

Although the components mentioned are implemented, where they are configured as hardware components, from a CPU and a memory of an arbitrary computer, a program stored in the memory, a storage and so forth, FIG. 25 depicts functional blocks implemented by cooperation of the components. Accordingly, it is recognized by those skilled in the art that the functional blocks can be implemented in various forms only from hardware, only from software, or from a combination of hardware and software. It is to be noted that those functional blocks to which like reference characters to those applied to like functional blocks depicted in FIG. 3 have such functions as described hereinabove with reference to FIG. 3 and operate in a similar manner. It is to be noted that the information processing apparatus 10 may be configured including the functional blocks depicted in FIGS. 3 and 25. It is to be noted that, while it is assumed that the information processing apparatus 10 of the embodiment includes the functional blocks depicted in FIGS. 3 and 25, part of the functional blocks depicted in FIGS. 3 and 25 may be implemented otherwise by the terminal apparatus 2.

The event list creation section 200 creates an event list which associates time information and physical solid image information with events on the basis of the schedule information registered in the recording unit 140 by the schedule registration section 150, and records the event list into the recording unit 140. More particularly, the event list creation section 200 derives time information for an event list from the time information set in the schedule table 148 to create an event list.

Here, differences between a schedule table and an event list are described. The schedule table represents behavior (event) schedules of the user for one day, and start time and end time set for each event indicate a time zone within which the event is to be carried out. Therefore, in the schedule table, time zones set for events do not overlap with each other in time, and at the same time with or later than end time of a preceding event, start time of a succeeding event is set.

Meanwhile, the event list is created in order to determine a situation of the user on the basis of the schedule table, and in order to raise the determination accuracy of the user situation, the time zone of each event set in the schedule table is set so as to be expanded. In the schedule table 148 depicted in FIG. 23, it is scheduled that the user carries out the wake-up event between 7:00 and 8:00 and then carries out the going-to-work event between 8:00 and 9:00. However, actually the user may wake up before 7:00 and may go out to work before 8:00. In this manner, although the schedule table 148 represents average behaviors for one day, if the schedule table 148 is applied to daily behaviors, the user sometimes takes behaviors displaced from those of the schedule table 148.

Therefore, the event list is created such that the time zone of each event in the schedule table 148 is expanded so that a behavior in a time zone displaced from that of the schedule table 148 can be grasped to make it possible to determine the situation of the user with high accuracy.

FIG. 26 depicts a view illustrating an event list. The upper stage indicates events and time zones of the events in the schedule table 148, and the lower state indicates a manner in which the time zones of the events are expanded. For example, as regards the wake-up event, while the wake-up event in the schedule table 148 is scheduled in the time zone from 7:00 to 8:00, the wake-up event in the event list is expanded to a time zone from 5:00 to 8:00. It is to be noted that, in the event list, a time zone which includes at least the time zone of an event in the schedule information is set to the time zone associated with the event. It is to be noted that only it is necessary for the time information of the event list to include a time zone of an event in the schedule information, and the time information may be same as the time zone of the event in the schedule information.

The event list creation section 200 creates an event list 152 on the basis of the schedule information registered in the schedule table 148 and records the event list 152 into the recording unit 140. As described hereinabove, the event list creation section 200 sets a time zone at least including a time zone of each event in the registered schedule information to the time information to be associated with the event.

FIG. 27 depicts an example of the event list 152. In this event list 152, an event order number, time information indicative of starting possible time and ending possible time, and physical solid image information are described in an associated relationship with each event. While the physical solid image information here is indicates as path information of an image file, it may otherwise be an image file name or may be a characteristic amount of a physical solid image. The physical solid image information is information utilized when it is compared with an image included in a picked up image, and particularly is utilized to determine whether an image associated with the event is included in a picked up image picked up by the image pickup unit 14.

It is to be noted that, as the event order number, the event list creation section 200 sets, for each event, a generation order number of the event in an associated relationship with the event. The event order number is set same as the arrangement order number of an event in the schedule table 148, and a number is applied in a descending order to each event beginning with the wake-up event to which "1" is applied as depicted in FIG. 27.

The event list creation section 200 changes a time zone defined by starting time and ending time in the schedule information to a time zone defined by starting possible time and ending possible time. As described hereinabove, the time zone of each event in the event list 152 is expanded including at least the time zone of the event in the schedule table 148.

The event list creation section 200 determines starting possible time of each event in accordance with the event order number. Here, the starting possible time of a succeeding event, namely, an event to which a higher event order number is set, is set later than the starting possible time of the preceding event, namely, of the event to which the lower event order number is set. Although the starting possible time of the succeeding event may be same as the starting possible time of the preceding event, it must not be earlier than the starting possible time of the preceding event. Similarly, the ending possible time of the succeeding event is set later than the ending possible time of the preceding event. Although the ending possible time of the succeeding event may be same as the ending possible time of the preceding event, it must not be earlier than the ending possible time of the preceding event. The event list creation section 200 creates an event list in this manner. It is to be noted that the created event list may be modifiable manually by the user.

The mounted state determination section 210 determines a mounted state of the information processing apparatus 10 in accordance with measurement information from the motion sensor 50. Where the user has the information processing apparatus 10 mounted thereon, the motion sensor 50 provides measurement information representing that the information processing apparatus 10 is operative to the mounted state determination section 210 in an interlocked relationship with a motion of the user. On the other hand, if the user removes the information processing apparatus 10 and places the information processing apparatus 10, for example, on a table, then the motion sensor 50 provides measurement information representing that the information processing apparatus 10 is inoperative to the mounted state determination section 210. For example, if the measurement information from the motion sensor 50 does not vary for a predetermined period of time (for example, for three minutes), then the mounted state determination section 210 determines that the information processing apparatus 10 is removed, but if the measurement information varies within the predetermined time period, then the mounted state determination section 210 determines that the information processing apparatus 10 is mounted.

In the following, the application processing function of the information processing apparatus 10 is described. This application processing function is executed in a state in which the event list 152 which associates time information and physical solid image information with events is created by the event list creation section 200 and recorded in the recording unit 140. It is to be noted that, while the event list creation section 200 creates an event list 152 on the basis of the schedule table 148 created by the information processing apparatus 10, for example, the schedule table 148 may be created by a different apparatus and the event list creation section 200 may create an event list on the basis of the schedule table 148 created by the different apparatus.

If the user turns on the information processing apparatus 10 and mounts the information processing apparatus 10 on itself, then the image pickup unit 14 picks up an image of the real space periodically and provides picked up images to the control section 230. The control section 230 acquires the picked up images and refers to the event list 152 to determine whether or not an event starting condition is satisfied. Then, if it is determined that an event starting condition is satisfied, then the control section 230 instructs the application execution section 220 to perform processing of the application. In response to the instruction, the application execution section 220 starts processing of the application associated with the event with regard to which the starting condition is satisfied.

In order to implement the application processing function, the control section 230 includes a candidate extraction portion 232, an image processing portion 234, a condition determination portion 236, and a starting instruction portion 238. Here, the candidate extraction portion 232 acquires current time information from the insider or the outside and specifies an event between the starting possible time and the ending possible time of which the current time information is included. For example, if the current time information is 7:30, then the candidate extraction portion 232 extracts the wake-up event of the event order number 1, the going-to-work event of the event order number 2, and the work event of the event order number 3. The extracted events are event candidates which can satisfy the starting condition at the point of time of 7:30.

The image processing portion 234 determines whether an image associated with an event extracted by the candidate extraction portion 232 is included in a picked up image picked up by the image pickup unit 14. This corresponds to a process by the image processing portion 234 of determining whether an image corresponding to the physical solid image information is included in a picked up image picked up within a time zone specified by the time information in the event list 152. In particular, it is determined whether or not an image corresponding to the physical solid image information associated with each of the wake-up event, going-to-work event, and work event is included in the picked up image at the point of time of 7:30. It is to be noted that the determination process of whether or not an image corresponding to the physical solid image information is included in a picked up image is carried out by deriving a coincidence degree between the characteristic amount of the image corresponding to the physical solid image information and the characteristic amount of an image included in the picked up image. If the characteristic amounts coincide fully with each other, then the images are identical with each other, and if the coincidence degree is very high, then the images are similar to each other. If the image processing portion 234 determines that an image corresponding to the physical solid image information is included in the picked up image, then the condition determination portion 236 decides that an event starting condition is satisfied.

By recording physical solid image information of a plurality of physical solid images in an associated relationship with an event in the event list 152, the possibility that a starting condition of the event may be satisfied can be enhanced. For example, where physical solid image information of the clock and the table is recorded in an associated relationship with the wake-up event, if the image processing portion 234 determines that an image of the clock or the table is included in a picked up image, then the condition determination portion 236 can determine that a starting condition of the wake-up event is satisfied. By associating physical solid image information of a plurality of physical solid images with an event in this manner, it is possible to accurately determine satisfaction of a starting condition of the event. If the condition determination portion 236 determines that a starting condition of the wake-up event is satisfied, then the starting instruction portion 238 instructs the application execution section 220 to carry out processing of the application and notifies the application execution section 220 of the event name for which the starting condition is satisfied. The application execution section 220 starts processing of the application corresponding to the event whose starting condition is satisfied.

FIG. 28 depicts a content table which associates events and contents with each other. The content table 154 is recorded into the recording unit 140, and the application execution section 220 reproduces a content associated with an event conveyed from the starting instruction portion 238 in accordance with the content table 154 and outputs the reproduced content from the earphone 16. While, in the content table 154, events and genres of reproduction contents are associated with each other, actually the storage address of the content playlist in the recording unit 140, the URL of the content server 4 or the like may be described. The application execution section 220 reproduces a content associated with an event whose starting condition is satisfied.

Although the content table 154 may be created by the user associating contents with events, in the example depicted in FIG. 28, a content table 154 created by a skill in the art in advance is depicted. Therefore, an enrichment lesson event, an exercise event and so forth which are not set in the event list 152 are included in the content table 154. However, the user may suitably edit the content table 154 to allocate a content depending upon the taste thereof to an event.

It is to be noted that, as depicted in FIG. 28, no content is associated with several events. Here, no content is associated with the work event, enrichment lesson event, and taking-bath event, and this signifies that, in those events, the application execution section 220 reproduces no content. Accordingly, even if an instruction to process an application is received from the starting instruction portion 238, the application execution section 220 does not carry out reproduction of a content when it is notified that a starting condition of the work event, enrichment lesson event, or taking-bath event is satisfied.

It is to be noted that, while the image processing portion 234 determines whether an image associated with an event extracted by the candidate extraction portion 232 is included in a picked up image, it may exclude an image which is determined as being included in a picked up image from a subsequent determination target. This can reduce the load by the image determination process. Further, it may exclude entire images included in the event whose starting condition is satisfied from a determination target. This eliminates the necessity to carry out a determination process of a different image included in the started event and can reduce the load by the image determination process.

Further, the condition determination portion 236 may determine satisfaction of an event starting condition in accordance with the generation order number registered in the event list. For example, referring to FIG. 27, while the event order number of the wake-up event is set to 1 and the event order number of the going-to-work event is set to 2, if the condition determination portion 236 first determines satisfaction of a starting condition for the going-to-work event, then it does not thereafter determine satisfaction of a starting condition of the wake-up event. Although it is originally preferable for a starting condition for the going-to-work event to be satisfied after a starting condition for the wake-up event is satisfied, after the starting condition for the going-to-work event is satisfied, satisfaction of a starting condition for an event to which an event order number following the event order number of the going-to-work event is set is supervised. Therefore, if satisfaction of a starting condition for a certain event is determined by the condition determination portion 236, then the candidate extraction portion 232 extracts events which have an event order number set later than the event order number of the certain event and have starting possible time and ending possible time between which the current time point is included as candidate events. Further, the candidate extraction portion 232 excludes those events whose starting condition is satisfied and which precede to the event just mentioned from the candidate event. Consequently, an image associated with any event to which an event order number lower than that of an event whose starting condition is satisfied is set can be excluded from the determination target by the image processing portion 234, and the processing load upon the candidate extraction portion 232 can be reduced.

It is to be noted that the application execution section 220 continuously executes processing of an application until it is notified from the starting instruction portion 238 that a starting condition for a different event is satisfied. If the application execution section 220 is notified that a starting condition for a different event is satisfied, then the application execution section 220 refers to the content table 154 to start reproduction of a content associated with the different event. It is to be noted that, if the application execution section 220 is not notified during execution of a content associated with a certain event but before the ending possible time of the event that a starting condition for a different event is satisfied, then the application execution section 220 ends the reproduction process of the content at the ending possible time.

Further, the application execution section 220 may continue or end processing of an application in response to a mounted state of the information processing apparatus 10. If the mounted state determination section 210 determines that the user does not have the information processing apparatus 10 mounted thereon, then the mounted state determination section 210 may notify the application execution section 220 of this, and the application execution section 220 may stop the processing of the application. Where the information processing apparatus 10 is a wearable computer, since the user can listen to reproduced sound from the earphone 16 in a state in which the user has the information processing apparatus 10 mounted thereon, if the output sound cannot be heard, then there is no necessity for the application execution section 220 to output and reproduce sound. Therefore, it is preferable that, if the information processing apparatus 10 is not mounted on the user, the application execution section 220 stops processing of the application.

The present invention has been described in connection with the embodiment thereof. It can be recognized by those skilled in the art that the embodiment is illustrative and various modifications can be made to the combinations of the components and the processes of the embodiment and that also such modifications are included within the scope of the present invention.

While it is described in the description of the embodiment that the event list creation section 200 creates an event list which associates an event generation order number, time information, and physical solid image information of one or more physical solid images with an event, the event list creation section 200 may create an event list which further associates GPS information with the items mentioned. The GPS information represents position information of a position at which physical solid image information is acquired. Therefore, the candidate extraction portion 232 can easily extract a candidate event with regard to which GPS information recorded in the event list and GPS information of the position at present coincide with each other.

Further, while it is indicated in the embodiment that a content of music or the like is reproduced for the user, mark image information of a company or a merchandise may be registered in the event list. Similarly as in the embodiment, also in such an event list as just described, time information and mark image information are registered in an associated relationship with an event. The control section 230 determines whether an image corresponding to mark image information is included in a picked up image picked up within a time zone prescribed in the event list. Then, if the image is included in the picked up image, then the control section 230 determines that the event starting condition is satisfied, and instructs the application execution section 220 to carry out processing of the application. In response to the instruction, the application execution section 220 may cause the display apparatus 12 to display advertisement information or the like associated with the event.

Further, while it is described in the foregoing description of the embodiment that the application execution section 220 refers to the content table 154 to reproduce a content corresponding to an event, it may be devised to apply countermeasures for preventing, upon such reproduction, the same content from being always selected with regard to the event. The application execution section 220 may have a content searching function such that, for example, an object name included in a picked up image and, for example, a genre and an object name of the content table 154 are used as search keys to search for and acquire a content from the content server 4.

Further, while the event list creation section 200 creates an event list which associates physical solid image information with an event, for example, sound information may be associated with an event. For example, sound generated at a particular place or in a condition for event detection may be acquired from the microphone 20, and the acquired sound information may be utilized for a determination process of a starting condition of an event in association with an event.

It is to be noted that, while functional blocks of the information processing apparatus 10 are depicted in FIGS. 3 and 25, in the information processing system 1, the terminal apparatus 2 may operate as an information processing apparatus and execute part of the functions depicted in FIGS. 3 and 25. In particular, in the information processing system 1, the information processing apparatus 10 and the terminal apparatus 2 which includes an information processing function may cooperate with each other to implement various processing functions.

In particular, the terminal apparatus 2 may include the input acceptance unit 100, the image processing section 110 and the schedule registration section 150 of the processing unit 80, and the recording unit 140 depicted in FIG. 3. Alternatively, the terminal apparatus 2 may include the input acceptance unit 100, the processing unit 80, and the recording unit 140 depicted in FIG. 25. It is to be noted that, where the terminal apparatus 2 executes part of the processing functions, outputs of the image pickup unit 14, microphone 20 and so forth are transmitted to the terminal apparatus 2, by which the various processes are executed. Where at least one of the information processing apparatus 10 and the terminal apparatus 2 implements the processing functions depicted in FIGS. 3 and 25 in this manner, the information processing system 1 can be implemented which suitably provides a service to a user and provides a user interface which can be handled readily by a user.

### [Reference Signs List]

1...Information processing system, 10...Information processing apparatus, 12...Display apparatus, 14...Image pickup unit, 16...Earphone, 18...Housing, 20...Microphone, 50...Motion sensor, 52...GPS sensor, 80...Processing unit, 100...Input acceptance unit, 110...Image processing section, 112...Real physical solid specification portion, 114...Physical solid image determination portion, 116...Event determination portion, 120...Display processing section, 122...Menu displaying portion, 124...Event displaying portion, 126...Physical solid image displaying portion, 128...Time axis displaying portion, 130...Locus displaying portion, 140...Recording unit, 150...Schedule registration section, 200...Event list creation section, 210...Mounted state determination section, 220...Application execution section, 230...Control section, 232...Candidate extraction portion, 234...Image processing portion, 236...Condition determination portion, 238...Starting instruction portion.

### [Industrial Applicability]

The present invention can be utilized in the information processing field for processing a picked up image.

## Claims

1. An information processing apparatus which is configured to present a virtual object in a superposed relationship with a real space, the information processing apparatus comprising:
an image pickup unit (14) configured to pick up an image of a real space;
a mounted type display unit (12) configured to display the virtual object so as to be observed by a user in the real space;
a recording unit (140) configured to record an event list (152) in which time information and an image of a real physical solid are associated with an event, wherein the associated image of the real physical solid is automatically extracted from a plurality of sample images picked up by the image pickup unit (14), each sample image being picked up at a start time of the event, wherein the plurality of sample images are picked up over several occurrences of the event, the extracted image corresponding to an object that appears most frequently in the plurality of sample images;
a control section (230) configured to determine whether or not an event starting condition is satisfied; and
an execution unit (80) configured to process an application, wherein
the control section includes
an image processing portion (234) configured to determine whether an image corresponding to the image of a real physical solid recorded in the recording unit is included in a picked up image picked up within a time zone specified by the time information recorded in the recording unit,
a condition determination portion (236) configured to determine that the event starting condition is satisfied if it is determined that the image corresponding to the image of a real physical solid is included in the picked up image, and
an instruction portion (238) configured to instruct the execution unit to execute processing of the application, wherein the execution unit is configured to start processing of the application associated with the event whose starting condition is satisfied.

2. The information processing apparatus according to claim 1, wherein the execution unit is configured to carry out reproduction of a content.

3. The information processing apparatus according to claim 1 or 2, further comprising:
a registration section (150) configured to register schedule information (148) of a user; and
an event list creation section (200) configured to derive time information associated with the event from the registered schedule information.

4. The information processing apparatus according to claim 3, wherein the event list creation section is configured to set a time zone which includes at least a time zone of the event in the registered schedule information as the time information associated with the event.

5. The information processing apparatus according to any one of claims 1 to 4, wherein the recording unit is configured to record a plurality of images of real physical solids in an associated relationship with one event.

6. The information processing apparatus according to any one of claims 1 to 5, wherein the recording unit is configured to record a generation order number in an associated relationship with each of a plurality of events in the event list, the generation order number indicating an order in which events in the event list are expected to occur.

7. The information processing apparatus according to claim 6, wherein the condition determination portion is configured to determine satisfaction of an event starting condition in accordance with the generation order number.

8. The information processing apparatus according to any one of claims 1 to 7, further comprising:
a mounted state determination section (210) configured to determine a mounted state of the information processing apparatus, wherein
if the mounted state determination section determines that the information processing apparatus is not mounted on a user, then the execution unit is configured to stop processing of the application.

9. An application execution method for use with an information processing apparatus which presents a virtual object in a superposed relationship with a real space, the method comprising:
a step of acquiring a picked up image obtained by picking up a real space;
a step of referring to an event list in which time information and an image of a real physical solid are associated with an event to determine whether an image corresponding to the image of a real physical solid included in the event list is included in the picked up image picked up within a time zone specified by the time information included in the event list, wherein the associated image of the real physical solid is automatically extracted from a plurality of sample images, each sample image being picked up at a start time of the event, wherein the plurality of sample images are picked up over several occurrences of the event the extracted image corresponding to an object that appears most frequently in the plurality of sample images;
a step of determining, when it is determined that an image corresponding to the image of a real physical solid is included in the picked up image, that an event starting condition is satisfied; and
a step of starting processing of an application associated with the event whose starting condition is satisfied.

## Patentansprüche

1. Datenverarbeitungsvorrichtung, die konfiguriert ist, ein virtuelles Objekt in einer überlagerten Beziehung mit einem realen Raum darzustellen, wobei die Datenverarbeitungsvorrichtung Folgendes umfasst:
eine Bildaufnahmeeinheit (14), die konfiguriert ist, ein Bild eines realen Raums aufzunehmen;
eine Anzeigeeinheit des montierten Typs (12), die konfiguriert ist, das virtuelle Objekt anzuzeigen, so dass es durch einen Anwender in dem realen Raum beobachtet werden kann;
eine Aufzeichnungseinheit (140), die konfiguriert ist, eine Ereignisliste (152) aufzuzeichnen, in der Zeitinformationen und ein Bild eines realen physikalischen Festkörpers einem Ereignis zugeordnet sind, wobei das zugeordnete Bild des realen physikalischen Festkörpers automatisch aus mehreren Musterbildern extrahiert wird, die durch die Bildaufnahmeeinheit (14) aufgenommen werden, wobei jedes Musterbild zu einer Startzeit des Ereignisses aufgenommen wird, wobei die mehreren Musterbilder über mehrere Erscheinungen des Ereignisses aufgenommen werden, wobei das extrahierte Bild einem Objekt entspricht, das am häufigsten in den mehreren Musterbildern erscheint;
einen Steuerabschnitt (230), der konfiguriert ist, zu bestimmen, ob eine Ereignisstartbedingung erfüllt ist oder nicht; und
eine Ausführungseinheit (80), die konfiguriert ist, eine Anwendung zu verarbeiten, wobei
der Steuerabschnitt Folgendes enthält:
einen Bildverarbeitungsabschnitt (234), der konfiguriert ist, zu bestimmen, ob ein Bild, das dem Bild eines realen physikalischen Festkörpers entspricht, das in der Aufzeichnungseinheit aufgezeichnet wurde, in einem aufgenommenen Bild enthalten ist, das innerhalb einer Zeitzone aufgenommen wird, die durch die Zeitinformationen, die in der Aufzeichnungseinheit aufgezeichnet sind, spezifiziert ist,
einen Bedingungsbestimmungsabschnitt (236), der konfiguriert ist, zu bestimmen, dass die Ereignisstartbedingung erfüllt ist, wenn bestimmt wird, dass das Bild, das dem Bild eines realen physikalischen Festkörpers entspricht, in dem aufgenommen Bild enthalten ist, und einen Anweisungsabschnitt (238), der konfiguriert ist, die Ausführungseinheit anzuweisen, die Verarbeitung der Anwendung auszuführen, wobei die Ausführungseinheit konfiguriert ist, eine Verarbeitung der Anwendung, die dem Ereignis zugeordnet ist, dessen Startbedingung erfüllt ist, zu starten.

2. Datenverarbeitungsvorrichtung nach Anspruch 1, wobei die Ausführungseinheit konfiguriert ist, eine Wiedergabe eines Inhalts auszuführen.

3. Datenverarbeitungsvorrichtung nach Anspruch 1 oder 2, die ferner Folgendes umfasst:
einen Registrierabschnitt (150), der konfiguriert ist, Planungsinformationen (148) eines Anwenders zu registrieren; und
einen Ereignislistenerzeugungsabschnitt (200), der konfiguriert ist, Zeitinformationen, die dem Ereignis zugeordnet sind, von den registrierten Planungsinformationen abzuleiten.

4. Datenverarbeitungsvorrichtung nach Anspruch 3, wobei der Ereignislistenerzeugungsabschnitt konfiguriert ist, eine Zeitzone einzustellen, die zumindest eine Zeitzone des Ereignisses in den registrierten Planungsinformationen als die Zeitinformationen, die dem Ereignis zugeordnet sind, enthält.

5. Datenverarbeitungsvorrichtung nach einem der Ansprüche 1 bis 4, wobei die Aufzeichnungseinheit konfiguriert ist, mehrere Bilder von realen physikalischen Festkörpern in einer einem Ereignis zugeordneten Beziehung aufzuzeichnen.

6. Datenverarbeitungsvorrichtung nach einem der Ansprüche 1 bis 5, wobei die Aufzeichnungseinheit konfiguriert ist, eine Erzeugungsfolgennummer in einer zugeordneten Beziehung zu jedem von mehreren Ereignissen in der Ereignisliste aufzuzeichnen, wobei die Erzeugungsfolgennummer eine Reihenfolge angibt, in der erwartet wird, dass Ereignisse in der Ereignisliste auftreten.

7. Datenverarbeitungsvorrichtung nach Anspruch 6, wobei der Bedingungsbestimmungsabschnitt konfiguriert ist, eine Erfüllung einer Ereignisstartbedingung in Übereinstimmung mit der Erzeugungsfolgennummer zu bestimmen.

8. Datenverarbeitungsvorrichtung nach einem der Ansprüche 1 bis 7, die ferner Folgendes umfasst:
einen Abschnitt zur Bestimmung eines befestigten Zustands (210), der konfiguriert ist, einen befestigten Zustand der Datenverarbeitungsvorrichtung zu bestimmen, wobei
dann, wenn der Abschnitt zur Bestimmung des befestigten Zustands bestimmt, dass die Datenverarbeitungsvorrichtung nicht an einem Anwender befestigt ist, die Ausführungseinheit konfiguriert ist, die Verarbeitung der Anwendung zu stoppen.

9. Anwendungsausführungsverfahren für die Verwendung mit einer Datenverarbeitungsvorrichtung, die ein virtuelles Objekt in einer überlagerten Beziehung mit einem realen Raum darstellt, wobei das Verfahren Folgendes umfasst:
einen Schritt des Erfassens eines aufgenommenen Bildes, das durch Aufnehmen eines realen Raums erhalten wird;
einen Schritt der Bezugnahme auf eine Ereignisliste, in der Zeitinformationen und ein Bild eines realen physikalischen Festkörpers einem Ereignis zugeordnet sind, um zu bestimmen, ob ein Bild, das dem Bild eines realen physikalischen Festkörpers, das in der Ereignisliste enthalten ist, entspricht, in dem aufgenommen Bild enthalten ist, das innerhalb einer Zeitzone aufgenommen wird, die durch die Zeitinformationen spezifiziert wird, die in der Ereignisliste enthalten sind, wobei das zugeordnete Bild des realen physikalischen Festkörpers automatisch aus mehreren Musterbildern extrahiert wird, wobei jedes Musterbild zu einer Startzeit des Ereignisses aufgenommen wird, wobei die mehreren Musterbilder über mehrere Erscheinungen des Ereignisses des extrahierten Bildes aufgenommen werden, das einem Objekt entspricht, das am häufigsten in den mehreren Musterbildern erscheint;
einen Schritt des Bestimmens, wenn bestimmt wird, dass ein Bild, das dem Bild eines realen physikalischen Festkörpers entspricht, in dem aufgenommenen Bild enthalten ist, dass eine Ereignisstartbedingung erfüllt ist; und
einen Schritt des Startens einer Verarbeitung einer Anwendung, die dem Ereignis zugeordnet ist, dessen Startbedingung erfüllt ist.

## Revendications

1. Appareil de traitement d'informations, configuré pour présenter un objet virtuel en relation superposée avec un espace réel, l'appareil de traitement d'informations comprenant :
une unité de prise d'image (14) configurée pour prendre une image d'un espace réel ;
une unité d'affichage de type porté (12) configuré pour afficher l'objet virtuel pour permettre son observation par un utilisateur dans l'espace réel ;
une unité d'enregistrement (140) configurée pour enregistrer une liste d'événements (152) dans laquelle des informations horaires et une image d'un solide physique réel sont associées à un événement, l'image associée du solide physique réel étant extraite automatiquement d'une pluralité d'images-échantillons prises par l'unité de prise d'image (14), chaque image-échantillon étant prise à une heure de début de l'événement, la pluralité d'images-échantillons étant prises en l'espace de plusieurs survenues de l'événement, l'image extraite correspondant à un objet apparaissant le plus fréquemment dans la pluralité d'images-échantillons ;
une section de commande (230) configurée pour déterminer si une condition de lancement d'événement est satisfaite ou non ; et
une unité d'exécution (80) configurée pour traiter une application,
la section de commande comportant
une partie de traitement d'image (234) configurée pour déterminer si une image correspondant à l'image d'un solide physique réel enregistrée dans l'unité d'enregistrement est contenue dans une image prise, prise au sein d'un créneau horaire stipulé par les informations horaires enregistrées dans l'unité d'enregistrement,
une partie de détermination de condition (236) configurée pour déterminer que la condition de lancement d'événement est satisfaite s'il est déterminé que l'image correspondant à l'image d'un solide physique réel est contenue dans l'image prise, et
une partie d'instruction (238) configurée pour donner pour instruction à l'unité d'exécution d'exécuter un traitement de l'application,
l'unité d'exécution étant configurée pour lancer le traitement de l'application associée à l'événement dont la condition de lancement est satisfaite.

2. Appareil de traitement d'informations selon la revendication 1, dans lequel l'unité d'exécution est configurée pour accomplir la reproduction d'un contenu.

3. Appareil de traitement d'informations selon la revendication 1 ou 2, comprenant en outre :
une section de consignation (150) configurée pour conigner des informations d'emploi du temps (148) d'un utilisateur ; et
une section de création de liste d'événements (200) configurée pour déduire des informations horaires associées à l'événement à partir des informations d'emploi du temps consignées.

4. Appareil de traitement d'informations selon la revendication 3, dans lequel la section de création de liste d'événements est configurée pour définir, en tant qu'informations horaires associées à l'événement, un créneau horaire comportant au moins un créneau horaire de l'événement dans les informations d'emploi du temps consignées.

5. Appareil de traitement d'informations selon l'une quelconque des revendications 1 à 4, dans lequel l'unité d'enregistrement est configurée pour enregistrer une pluralité d'images de solides physiques réels en relation associée avec un événement particulier.

6. Appareil de traitement d'informations selon l'une quelconque des revendications 1 à 5, dans lequel l'unité d'enregistrement est configurée pour enregistrer un numéro d'ordre de génération en relation associée avec chacun d'une pluralité d'événements dans la liste d'événements, le numéro d'ordre de génération indiquant un ordre dans lequel des événements dans la liste d'événements sont censés survenir.

7. Appareil de traitement d'informations selon la revendication 6, dans lequel la partie de détermination de condition est configurée pour déterminer la satisfaction d'une condition de lancement d'événement conformément au numéro d'ordre de génération.

8. Appareil de traitement d'informations selon l'une quelconque des revendications 1 à 7, comprenant en outre :
une section de détermination d'état porté (210) configurée pour déterminé un état porté de l'appareil de traitement d'informations,
si la section de détermination d'état porté détermine que l'appareil de traitement d'informations n'est pas porté par un utilisateur, l'unité d'exécution étant alors configurée pour interrompre le traitement de l'application.

9. Procédé d'exécution d'application destiné à être utilisé avec un appareil de traitement d'informations qui présente un objet virtuel en relation superposée avec un espace réel, le procédé comprenant :
une étape d'acquisition d'une image prise obtenue par prise d'un espace réel ;
une étape de renvoi à une liste d'événements dans laquelle des informations horaires et une image d'un solide physique réel sont associées à un événement dans le but de déterminer si une image correspondant à l'image d'un solide physique réel contenue dans la liste d'événements est contenue dans l'image prise, prise au sein d'un créneau horaire stipulé par les informations horaires contenues dans la liste d'événements, l'image associée du solide physique réel étant extraite automatiquement d'une pluralité d'images-échantillons, chaque image-échantillon étant prise à une heure de début de l'événement, la pluralité d'images-échantillons étant prises en l'espace de plusieurs survenues de l'événement, l'image extraite correspondant à un objet apparaissant le plus fréquemment dans la pluralité d'images-échantillons ;
une étape de détermination, en cas de détermination qu'une image correspondant à l'image d'un solide physique réel est contenue dans l'image prise, qu'une condition de lancement d'événement est satisfaite ; et
une étape de lancement du traitement d'une application associée à l'événement dont la condition de lancement est satisfaite.
